(19) **Europäisches Patentamt European Patent Office Office européen des brevets**

(11) **EP 3 874 230 B1**

(12) **FASCICULE DE BREVET EUROPEEN**

(45) Date de publication et mention
de la délivrance du brevet:
**28.01.2026 Bulletin 2026/05**

(21) Numéro de dépôt: **19795003.3**

(22) Date de dépôt: **29.10.2019**

(51) Classification Internationale des Brevets (IPC):
**G01C 21/20** *(2006.01)* **G01S 13/06** *(2006.01)*
**G01S 13/52** *(2006.01)*

(52) Classification Coopérative des Brevets (CPC):
**G01C 21/20; G01S 13/588; G01S 13/589;
G01S 13/60; G01S 13/726; G01S 13/87;
G01S 13/931;** G01S 13/44; G01S 2013/93271

(86) Numéro de dépôt international:
**PCT/EP2019/079534**

(87) Numéro de publication internationale:
**WO 2020/089231 (07.05.2020 Gazette 2020/19)**

(54) **PROCÉDÉ DE DÉTERMINATION D'UN VECTEUR DE DÉPLACEMENT D'UN VÉHICULE AUTOMOBILE, PROCÉDÉ DE DÉTERMINATION D'UNE VITESSE DU VÉHICULE ET VÉHICULE ASSOCIÉ**

VERFAHREN ZUR BESTIMMUNG EINES BEWEGUNGSVEKTORS EINES KRAFTFAHRZEUGS, VERFAHREN ZUR BESTIMMUNG EINER DREHZAHL DES FAHRZEUGS UND ZUGEHÖRIGES FAHRZEUG

METHOD FOR DETERMINING A MOVEMENT VECTOR OF A MOTOR VEHICLE, METHOD FOR DETERMINING A SPEED OF THE VEHICLE AND ASSOCIATED VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2018 FR 1860106**

(43) Date de publication de la demande:
**08.09.2021 Bulletin 2021/36**

(73) Titulaire: **Ampere SAS
92100 Boulogne-Billancourt (FR)**

(72) Inventeurs:
• **PITA-GIL, Guillermo**
**7800 Versailles (FR)**
• **SAUSSARD, Romain**
**91300 Massy (FR)**
• **ZAIR, Salim**
**91300 Massy (FR)**

(74) Mandataire: **Renault Group
Renault s.a.s.
1 avenue du Golf
FR TCR AVA 055
78084 Guyancourt Cedex (FR)**

(56) Documents cités:
**US-A1- 2018 024 569**

• **M.W.M.G. DISSANAYAKE ET AL: "A solution to the simultaneous localization and map building (SLAM) problem", IEEE TRANSACTIONS ON ROBOTICS AND AUTOMATION, vol. 17, no. 3, 1 June 2001 (2001-06-01), US, pages 229 - 241, XP055575116, ISSN: 1042-296X, DOI: 10.1109/ 70.938381**
• **DOMINIK KELLNER ET AL: "Instantaneous ego-motion estimation using Doppler radar", 16TH INTERNATIONAL IEEE CONFERENCE ON INTELLIGENT TRANSPORTATION SYSTEMS (ITSC 2013), 1 October 2013 (2013-10-01), pages 869 - 874, XP055604073, ISBN: 978-1-4799-2914-6, DOI: 10.1109/ ITSC.2013.6728341**

## EP 3 874 230 B1

**Description**

DOMAINE TECHNIQUE AUQUEL SE RAPPORTE L'INVENTION

La présente invention concerne la caractérisation du mouvement d'un véhicule automobile, au moyen de capteurs équipant le véhicule.

Elle concerne plus particulièrement un procédé dans lequel un système radar équipant le véhicule détecte des éléments présents dans l'environnement du véhicule, et détermine leurs positions par rapport au véhicule.

Elle concerne également un véhicule automobile dans lequel un tel procédé est mis en œuvre.

ARRIERE-PLAN TECHNOLOGIQUE

De plus en plus de véhicules automobiles sont équipés aujourd'hui de systèmes d'aide à la conduite, tels que des systèmes de détection d'obstacle, de régulation de distance, ou encore de pilotage automatique de la direction du véhicule pour l'amener sur un emplacement de stationnement inoccupé.

Le fonctionnement de tels systèmes d'aide à la conduite nécessite une connaissance précise de la position du véhicule par rapport à son environnement, et donc un suivi des déplacements de ce véhicule.

Un procédé de détermination d'une position d'un véhicule automobile, basé sur des mesures par radar, est décrit dans l'article suivant : « Instantaneous ego-motion estimation using doppler radar », Dominik Kellner et al., in Intelligent Transportation system-(ITSC), 2013, 16th International IEEE Conference on. IEEE, 2013, pp 869-874. Dans ce procédé, un système radar détecte des éléments d'un environnement d'un véhicule et délivre des données représentatives de positions et de vitesses des éléments détectés par rapport au véhicule. Un traitement de ces données, exploitant la dépendance des vitesses des éléments détectés en fonction de leurs positions, permet alors de déterminer la vitesse de déplacement du véhicule, puis d'en déduire la position de ce véhicule par rapport à son environnement.

Mais le champ d'application de ce procédé est limité puisqu'il ne peut être mis en œuvre qu'avec un système radar fournissant non seulement les positions mais aussi les vitesses des éléments détectés.

US 2018/024569 A1 divulgue un véhicule autonome utilisant un radar pour localiser la position relative du véhicule par rapport aux objets sur/autour de la route. Les objets mobiles sont filtrés. Les données de retour des objets statiques sont mises en corrélation et, à chaque étape, la meilleure cartographie est trouvée (homographie) afin de déterminer la distance et la direction de déplacement du véhicule.

Dans le document "A solution to the simultaneous localization and map building (SLAM) problem" (M.W.M.G. DISSANAYAKE ET AL, IEEE pages 229-241) est divulgué l'utilisation d'un véhicule équipé d'un radar à 360° d'ouverture, adapté à détecter les obstacles et à en déduire la position instantanée du véhicule. Le procédé propose d'employer un filtre de Kalman étendu, utilisant en entrée les positions des obstacles statiques et en déduisant à chaque instant l'évolution de la position du véhicule. Mais ce type de solution peut manquer de robustesse.

OBJET DE L'INVENTION

Afin de remédier à l'inconvénient précité de l'état de la technique, la présente invention propose un procédé de détermination d'un vecteur de déplacement d'un véhicule automobile, comprenant une étape a) de détermination, par un système radar équipant le véhicule, de positions, par rapport au véhicule, à un instant donné, d'éléments d'un environnement du véhicule statiques par rapport à une voie de circulation sur laquelle se déplace le véhicule,

dans lequel, l'étape a) ayant été exécutée à un instant précédent pour déterminer les positions précédentes desdits éléments par rapport au véhicule, l'étape a) est exécutée à nouveau à un instant suivant pour déterminer les positions suivantes desdits éléments par rapport au véhicule, le procédé comprenant en outre les étapes suivantes :

b) associer lesdites positions précédentes auxdites positions suivantes pour former différents couples de positions regroupant chacun la position précédente et la position suivante d'un même élément de l'environnement du véhicule, et l'étape b) comprenant les étapes suivantes:

b1) pour différents couples de positions envisageables regroupant chacun l'une des positions suivantes et l'une des positions précédentes, déterminer un coût individuel, associé au couple de positions envisageable considéré, en fonction de la position précédente et de la position suivante de ce couple de positions envisageable, et
b2) parmi différents ensembles de couples de positions envisageables, identifier l'ensemble pour lequel la valeur d'une fonction de coût globale est la plus petite, cette fonction de coût globale étant déterminée en fonction des coûts individuels associés respectivement aux différents couples de positions de l'ensemble considéré, les couples de positions formés finalement à l'étape b) étant les couples de positions de l'ensemble ainsi identifié à l'étape b2).

2

c) déterminer par régression linéaire les caractéristiques respectives d'une translation d'ensemble et d'une rotation d'ensemble permettant, pour les couples de positions formés à l'étape b), de mettre en correspondance lesdites positions précédentes avec lesdites positions suivantes, et déterminer le vecteur de déplacement du véhicule en fonction des caractéristiques desdites translation et rotation d'ensemble.

De nombreux systèmes radars pour véhicule automobile disponibles commercialement sont capables de déterminer, parmi les éléments de l'environnement du véhicule qu'ils détectent, ceux qui sont statiques par rapport à une voie de circulation sur laquelle se déplace le véhicule. Ces systèmes délivrent alors des données représentatives des positions, par rapport au véhicule, à un instant donné, de ces éléments statiques. En revanche, peu de ces systèmes délivrent des informations relatives à la vitesse des éléments statiques ainsi détectés. Les systèmes radar qui délivrent des informations précises quant à la vitesse de tels éléments statiques sont d'ailleurs généralement onéreux.

Le procédé selon l'invention permet alors de déterminer le vecteur de déplacement du véhicule, même si système radar considéré ne fourni pas la vitesse des éléments statiques qu'il détecte dans l'environnement du véhicule.

Par ailleurs, le fait que le vecteur de déplacement soit déterminé en deux temps, avec en quelque sorte, lors de l'étape b) d'association, un pré-conditionnement des données acquises, permet une détermination robuste de ce vecteur même si le nombre d'éléments détectés par le système radar est réduit et même si certains des éléments, détectés lors de l'exécution précédente de l'étape a), ne sont pas détectés à nouveau lors de la nouvelle exécution de cette étape.

Les résultats obtenus ainsi s'avèrent notamment plus robustes que ceux obtenus, dans des conditions comparables, par un traitement de type « ICP » (selon l'acronyme anglo-saxon de « Iterative Closest Point », ou « répétition sur la base du point le plus proche ») dans lequel un vecteur de déplacement du véhicule serait déterminé, de proche en proche, par recherche de la transformation qui, en moyenne, permet de déplacer chaque position déterminée à l'étape a) précédente jusqu'à celle des positions, déterminées à l'étape a) suivante, qui en est la plus proche.

Une explication du manque de robustesse de la méthode « ICP » dans le présent contexte est précisément que le nombre de positions déterminées à chaque instant par le système radar est assez faible en pratique, de l'ordre de 50 au plus, et que plusieurs des éléments détectés à l'instant précédent peuvent ne plus être détectés à l'instant suivant.

D'autres caractéristiques non limitatives et avantageuses du procédé de détermination du vecteur de déplacement du véhicule, prises individuellement ou selon toutes les combinaisons techniquement possibles, sont les suivantes :

- l'étape b1) comprend, pour l'un au moins des couples de positions envisageables, les opérations suivantes :
- décaler la position précédente, en fonction d'une estimation de la vitesse de déplacement du véhicule, et de la durée entre lesdits instants précédent et suivant, pour obtenir une position extrapolée,
- déterminer un écart entre la position suivante et ladite position extrapolée, et
- déterminer le coût individuel associé à ce couple de positions, de manière ce qu'il soit d'autant plus grand que ledit écart est grand ;
- à l'étape b1), pour une partie au moins des couples de positions envisageables :
- préalablement au calcul du cout individuel associé au couple de positions envisageable considéré, il est déterminé s'il est possible, ou au contraire peu vraisemblable que ce couple regroupe deux positions successives d'un même élément de l'environnement du véhicule, et
- lorsqu'il a été déterminé qu'il est peu vraisemblable que ce couple regroupe deux positions successives d'un même élément de l'environnement du véhicule, on attribue audit coût individuel une valeur de seuil prédéterminée ;
- à l'étape b1), il est déterminé qu'il est peu vraisemblable que le couple de positions envisageable considéré regroupe deux positions successives d'un même élément de l'environnement du véhicule lorsque l'une des conditions suivantes est remplie :

    - ledit écart est supérieur à un écart maximal envisageable,
    - un sens de déplacement du véhicule, déduit du couple de positions envisageable considéré, est opposé à un sens de déplacement du véhicule déterminé précédemment,
    - un écart latéral par rapport à un axe longitudinal de déplacement du véhicule, déduit du couple de positions envisageable considéré, est supérieur à un écart latéral maximal envisageable ;

- l'étape c) comprend les étapes suivantes :

    c1) sélectionner aléatoirement, parmi les couples de positions formés à l'étape b), au moins trois couples de positions,
    c2) déterminer une première translation d'ensemble et une première rotation d'ensemble, par régression linéaire à partir des couples de positions sélectionnés à l'étape c1),
    c3) pour chaque couple de positions, formé à l'étape b) et qui n'a pas été sélectionné à l'étape c1) :

- transformer la position suivante en une position transformée, en appliquant à la position suivante la première translation et la première rotation d'ensemble déterminées à l'étape c2), et
- déterminer un résidu, en fonction d'une distance entre ladite position transformée et la position précédente de ce couple,

c4) sélectionner un sous-ensemble de couples de positions comprenant :

- les couples de positions sélectionnés à l'étape c1), et
- les couples de positions, formés à l'étape b), qui n'ont pas été sélectionnés à l'étape c1), et pour lesquels ledit résidu est inférieur à une limite donnée, et

déterminer une deuxième translation d'ensemble et d'une deuxième rotation d'ensemble, par régression linéaire, sur la base des positions précédentes et des positions suivantes des couples de ce sous-ensemble, et
c5) évaluer avec quelle précision la deuxième translation et la deuxième rotation transforment les positions suivantes des couples des positions de ce sous-ensemble, en les positions précédentes de ces couples,

l'ensemble des étapes c1) à c5) étant exécuté plusieurs fois successivement,
les caractéristiques de la translation d'ensemble et de la rotation d'ensemble déterminées finalement à l'étape c) étant les caractéristiques de la deuxième translation et de la deuxième rotation qui permettent de transformer lesdites positions suivantes en lesdites positions précédentes avec le plus de précision.

L'invention propose également un procédé de détermination d'une vitesse de déplacement d'un véhicule automobile, dans lequel un vecteur de déplacement du véhicule est déterminé conformément au procédé de détermination du vecteur de déplacement du véhicule décrit ci-dessus, le procédé de détermination de la vitesse du véhicule comprenant en outre les étapes suivantes :

d) déterminer une première estimation de la vitesse du véhicule à partir du vecteur de déplacement du véhicule déterminé à l'étape c),
e) déterminer une deuxième estimation de la vitesse du véhicule, en fonction d'une vitesse de rotation d'une roue du véhicule acquise par un capteur de vitesse de rotation, et
f) déterminer la vitesse du véhicule, en fonction de la première estimation de cette vitesse et de la deuxième estimation de cette vitesse, au moyen d'un filtre de Kalman configuré pour exécuter les étapes suivantes :

f1) déterminer une nouvelle estimation d'un vecteur d'état du véhicule, comprenant des composantes représentatives notamment de la vitesse et d'une accélération du véhicule,
f2) déterminer une estimation corrigée du vecteur d'état du véhicule, en recalant l'estimation du vecteur d'état déterminée à l'étape f1) sur la base des première et deuxième estimations de la vitesse du véhicule déterminées aux étapes d) et e),

les étapes f1) et f2) étant exécutées plusieurs fois successivement, et, lorsque l'étape f1) est exécutée à nouveau, ladite nouvelle estimation du vecteur d'état du véhicule est déterminée en fonction de l'estimation corrigée déterminée lors de l'exécution précédente de l'étape f2).

D'autres caractéristiques non limitatives et avantageuses du procédé de détermination de la vitesse du véhicule, prises individuellement ou selon toutes les combinaisons techniquement possibles, sont les suivantes :

- la deuxième estimation de la vitesse de déplacement du véhicule est déterminée en fonction en outre d'un rayon nominal de ladite roue, dont la valeur est préenregistrée dans le véhicule ;
- l'une des composantes du vecteur d'état du véhicule estimé par le filtre de Kalman est un facteur d'échelle, représentatif d'un écart entre ledit rayon nominal et un rayon effectif des roues du véhicule ;
- à l'étape f2), l'estimation de la vitesse du véhicule qui a été déterminée 7

à l'étape f1) est comparée à la deuxième estimation de la vitesse du véhicule en tenant compte de ce facteur d'échelle ;

- à l'étape f2), l'estimation du facteur d'échelle qui a été déterminée à l'étape f1) précédente est recalée en fonction du rapport entre :
- la première estimation de la vitesse du véhicule, déterminée à l'étape d) à partir des mesures issues du système radar, et

- l'estimation de la vitesse du véhicule déterminée à l'étape f1) précédente.

L'invention propose également un véhicule automobile comprenant :

- un système radar, configuré pour exécuter une étape a) de détermination de positions, par rapport au véhicule, à un instant donné, d'éléments de l'environnement du véhicule statiques par rapport à une voie de circulation sur laquelle se déplace le véhicule, le système radar étant configuré pour, après avoir exécuté l'étape a) à un instant précédent pour déterminer les positions précédentes desdits éléments par rapport au véhicule, exécuter à nouveau l'étape a) à un instant suivant pour déterminer les positions suivantes de ces éléments par rapport au véhicule, et
- une unité de traitement électronique programmée pour exécuter les étapes suivantes :

b) associer lesdites positions précédentes auxdites positions suivantes pour former différents couples de positions regroupant chacun la position précédente et la position suivante d'un même élément de l'environnement du véhicule, l'étape b) comprenant les étapes suivantes:b1) pour différents couples de positions envisageables regroupant chacun l'une des positions suivantes et l'une des positions précédentes, déterminer un coût individuel, associé au couple de positions envisageable considéré, en fonction de la position précédente et de la position suivante de ce couple de positions envisageable, et b2) parmi différents ensembles de couples de positions envisageables, identifier l'ensemble pour lequel la valeur d'une fonction de coût globale est la plus petite, cette fonction de coût globale étant déterminée en fonction des coûts individuels associés respectivement aux différents couples de positions de l'ensemble considéré, les couples de positions formés finalement à l'étape b) étant les couples de positions de l'ensemble ainsi identifié à l'étape b2),
c) déterminer par régression linéaire les caractéristiques d'une translation d'ensemble et une rotation d'ensemble permettant, pour les couples de positions formés à l'étape b), de transformer lesdites positions précédentes en des positions coïncidant quasiment avec lesdites positions suivantes, ou de transformer lesdites positions suivantes en des positions coïncidant quasiment avec lesdites positions précédentes, et déterminer un vecteur de déplacement du véhicule en fonction des caractéristiques de cette translation et de cette rotation d'ensemble.

Les caractéristiques optionnelles présentées plus haut en termes de procédé peuvent aussi s'appliquer au véhicule qui vient d'être décrit.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.
Sur les dessins annexés :

- la figure 1 représente schématiquement un véhicule automobile, vu de dessus,
- la figure 2 représente schématiquement les principales étapes d'un procédé de détermination d'une vitesse et d'une position du véhicule de la figure 1, mis en œuvre dans ce véhicule,
- la figure 3 représente schématiquement deux positions successives de plusieurs éléments d'un environnement du véhicule de la figure 1, déterminées par un système radar de ce véhicule au cours du procédé de la figure 2, et
- la figure 4 représente schématiquement l'évolution au cours du temps d'une vitesse du véhicule déterminée grâce au procédé de la figure 2, pour un exemple de trajet, ainsi que l'évolution d'une vitesse de référence de ce véhicule, déterminée par un capteur de référence, lors de ce trajet.

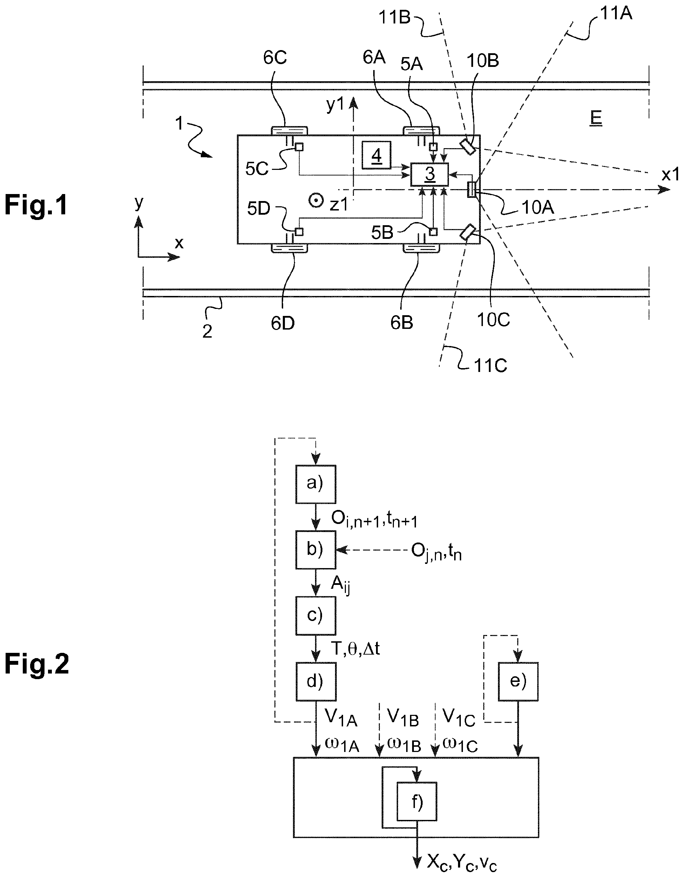

La figure 1 représente schématiquement un véhicule automobile équipé d'au moins un système radar 10A, 10B, 10C permettant, grâce à un traitement de données approprié, de déterminer un vecteur de déplacement du véhicule, et d'en déduire une vitesse et une position du véhicule 1 par rapport à son environnement E.
Les différents équipements du véhicule 1 à cette fin seront décrits dans un premier temps. Le procédé mis en œuvre pour déterminer le vecteur de déplacement du véhicule, ainsi que sa vitesse et sa position, sera décrit dans un deuxième temps. Des résultats obtenus grâce à ce procédé seront présentés pour finir.

Véhicule automobile

Tel que représenté sur la figure 1, le véhicule 1 comprend une unité de traitement 3 électronique, connectée à différents capteurs dont :

- une unité de mesure inertielle 4,

- quatre capteurs de vitesse de rotation 5A, 5B, 5C, 5D associés chacun à l'une des roues 6A, 6B, 6C, 6D du véhicule,
- un capteur d'angle de braquage 7, et
- trois systèmes radar 10A, 10B et 10C.

Chacun de ces systèmes radar 10A, 10B, 10C peut par exemple être réalisé au moyen d'un radar de modèle ARS430 du fabriquant Continental Automotive, dont le champ de détection s'étend jusqu'à 250 mètres en avant du radar, avec un angle d'ouverture de 150 degrés environ.

Ces trois systèmes radar 10A, 10B et 10C sont disposés à l'avant du véhicule 1.

Le premier système radar 10A, est orienté de sorte que son champ de détection 11A s'étende face au véhicule 1, en étant centré sur un axe longitudinal x1 du véhicule.

Le deuxième système radar 10B est orienté de sorte que son champ de détection 11B s'étende en avant du véhicule 1, mais en étant décalé, par exemple de 45 degrés, à gauche de l'axe longitudinal x1.

Quant au troisième système radar 10C, il est orienté de sorte que son champ de détection 11C s'étende lui aussi en avant du véhicule 1, mais en étant décalé, par exemple de 45 degrés, à droite de l'axe longitudinal x1.

Par ailleurs, chacun de ces trois systèmes radar 10A, 10B, 10C est configuré pour, lors d'une étape a) d'acquisition :

- détecter par écho radar des éléments de l'environnement E du véhicule, tels que des arbres, des poteaux, des portions de parapets ou de glissières de sécurité, ou encore d'autres véhicules, présents à un instant $t_n$ dans le champ de détection 11A, 11B, 11C du système radar considéré, et pour
- déterminer les positions des éléments détectés, par rapport au véhicule 1.

Ces positions sont les positions occupées, au même instant $t_n$, par les différents éléments détectés. Le système radar 10A, 10B, 10C relève donc, en quelque sorte, une image radar instantanée, représentative du contenu de son champ de détection 11A, 11B, 11C à l'instant $t_n$ considéré.

Chacun des trois systèmes radar 10A, 10B, 10C est configuré en outre pour identifier, parmi les éléments détectés, ceux qui sont statiques, c'est-à-dire immobiles par rapport à la voie de circulation 2 sur laquelle circule le véhicule 1. Le système radar 10A, 10B, 10C est configuré pour délivrer ensuite à l'unité de traitement 3 un ensemble de données représentatives des positions $O_{j,n}$, à l'instant $t_n$, par rapport au véhicule 1, des différents éléments de l'environnement E identifiés comme étant statiques.

Pour ce qui est maintenant de l'unité de mesure inertielle 4, elle comprend au moins un gyromètre et un accéléromètre, et délivre des données représentatives :

- de la vitesse de lacet $\omega$ du véhicule 1, c'est-à-dire de sa vitesse de rotation, par rapport à la voie de circulation 2, autour d'un axe z1 perpendiculaire au plancher du véhicule,
- de l'accélération longitudinale $a_x$ du véhicule 1, c'est-à-dire de la composante de son vecteur accélération selon l'axe longitudinal x1, et
- de l'accélération latérale $a_y$ du véhicule 1, c'est-à-dire de la composante de son vecteur accélération selon l'axe transversal y1.

Chaque capteur de vitesse de rotation 5A, 5B, 5C, 5D est configuré pour acquérir une vitesse de rotation de la roue 6A, 6B, 6C, 6D à laquelle il est associé. Cette vitesse de rotation peut être acquise par exemple au moyen d'un capteur de champ magnétique, solidaire du châssis du véhicule, et qui détecte les passages successifs de dents d'une roue dentée en matériau magnétique, solidaire de l'axe de la roue 6A, 6B, 6C, 6D considérée. La vitesse de rotation de la roue 6A, 6B, 6C, 6D, acquise par le capteur de rotation correspondant, est ensuite multipliée par un rayon nominal de la roue pour obtenir une vitesse de déplacement $v_{fl}$, $v_{fr}$, $v_{rl}$, $v_{rr}$ de cette roue par rapport à la voie de circulation 2 (vitesse qui est exprimée par exemple en kilomètres par heure). La valeur du rayon nominal de la roue est enregistrée dans une mémoire du véhicule, par exemple dans une mémoire du capteur de vitesse de rotation 5A, 5B, 5C, 5D ou dans une mémoire de l'unité de traitement 3 électronique. L'opération de multiplication en question peut être réalisée soit directement par le capteur de vitesse de rotation, soit par l'unité de traitement 3.

Les 4 capteurs de vitesse de rotation 5A, 5B, 5C et 5D permettent ainsi de déterminer :

- la vitesse de déplacement $v_{fl}$ de la roue avant gauche 6A,
- la vitesse de déplacement $v_{fr}$ de la roue avant droite 6B,
- la vitesse de déplacement $v_{rl}$ de la roue arrière gauche 6C, et
- la vitesse de déplacement $v_{rr}$ de la roue arrière droite 6D.

Les vitesses de déplacement de ces différentes roues dépendent directement de la vitesse de déplacement du véhicule 1, et, en cas de virage, de l'angle de braquage des roues. Comme expliqué en détail plus bas, elles interviennent dans la détermination la vitesse de déplacement du véhicule 1 réalisée par l'unité de traitement 3.

En pratique, il s'agit d'approximation des vitesses de déplacement des roues, dans la mesure où le rayon nominal de la roue enregistrée dans la une mémoire du véhicule ne correspond que rarement exactement au rayon de la roue.

Quant au capteur d'angle de braquage 7, il peut par exemple être réalisé au moyen d'un capteur de position angulaire monté sur la colonne de direction du véhicule. Il délivre une donnée représentative de l'angle de braquage $\delta$ des roues directrices du véhicule 1, ou tout au moins une donnée permettant à l'unité de traitement 3 de déterminer cet angle de braquage $\delta$. L'angle de braquage $\delta$ est l'angle formé entre l'axe longitudinal x1 du véhicule et le plan de rotation de l'une ou l'autre des roues directrices, qui correspondent ici à la roue avant gauche 6A et à la roue avant droite 6B du véhicule.

L'unité de traitement 3 comprend des moyens de communication pour recevoir les données délivrés par les différents capteurs 4, 5A, 5B, 5C, 5D, 7, 10A, 10B et 10C décrits ci-dessus. Elle comprend également une ou plusieurs mémoires électroniques et un ou plusieurs processeurs. Elle est programmée pour exécuter le procédé décrit ci-dessous.

Procédé de détermination du vecteur de déplacement du véhicule, et de sa vitesse de déplacement

Au cours de ce procédé, l'unité de traitement 3 détermine un vecteur de déplacement du véhicule, à partir de positions d'éléments de l'environnement détectées à deux instants successifs par les systèmes radar 10A, 10B et 10C du véhicule (étapes a) à c) de la figure 2).

Elle en déduit alors une première estimation $v_{1A}$, $v_{1B}$, $v_{1C}$ de la vitesse du véhicule (étape d)).

Par ailleurs, les vitesses de déplacement des roues $v_{fl}$, $v_{fr}$, $v_{rl}$ et $v_{rr}$, qui sont autant de deuxièmes estimations de la vitesse du véhicule 1, sont déterminées lors d'une étape e) en fonction des vitesses de rotation acquises par les capteurs de vitesse de rotation 5A, 5B, 5C et 5D.

L'unité de traitement 3 fusionne ensuite les premières estimations de la vitesse du véhicule, $v_{1A}$, $v_{1B}$ et $v_{1C}$ avec les vitesses de déplacement des roues $v_{fl}$, $v_{fr}$, $v_{rl}$ et $v_{rr}$, afin de déterminer avec précision la vitesse de déplacement du véhicule 1, ainsi que la position du véhicule dans son environnement. Cette fusion est réalisée par un filtre de Kalman particulier, au cours d'une étape f).

La manière de déterminer la première estimation $v_{1A}$, $v_{1B}$, $v_{1C}$ de la vitesse du véhicule 1 à partir des données délivrées par le système radar correspondant est ici la même pour chacun des trois systèmes radars 10A, 10B et 10C. Aussi, cette technique de détermination ne sera décrite en détail qu'une fois, dans le cas du premier système radar 10A.

Les étapes a) à d), au cours desquelles l'unité de traitement 3 détermine le vecteur de déplacement du véhicule 1, et la première estimation $v_{1A}$ de sa vitesse, seront décrites dans un premier temps.

L'étape f) de fusion, au cours de laquelle l'unité de traitement 3 détermine plus finement la valeur de la vitesse v du véhicule 1, sera décrite ensuite.

Détermination du vecteur de déplacement du véhicule et première estimation de sa vitesse

Au cours de ce procédé, le système radar 10A exécute l'étape a) d'acquisition plusieurs fois successivement, à plusieurs instants successifs $t_{n-1}$, $t_n$, $t_{n+1}$, ... (l'étape a) a été décrite plus haut, lors de la présentation de ce système radar). Cela permet de déterminer la façon dont les éléments de l'environnement E se déplacent par rapport au véhicule 1, et donc, inversement, d'en déduire la façon dont le véhicule se déplace par rapport à ces éléments fixes de l'environnement E. Dans le cas du modèle de radar mentionné ci-dessus, la durée entre deux exécutions successives de l'étape a) est de 70 millisecondes environ.

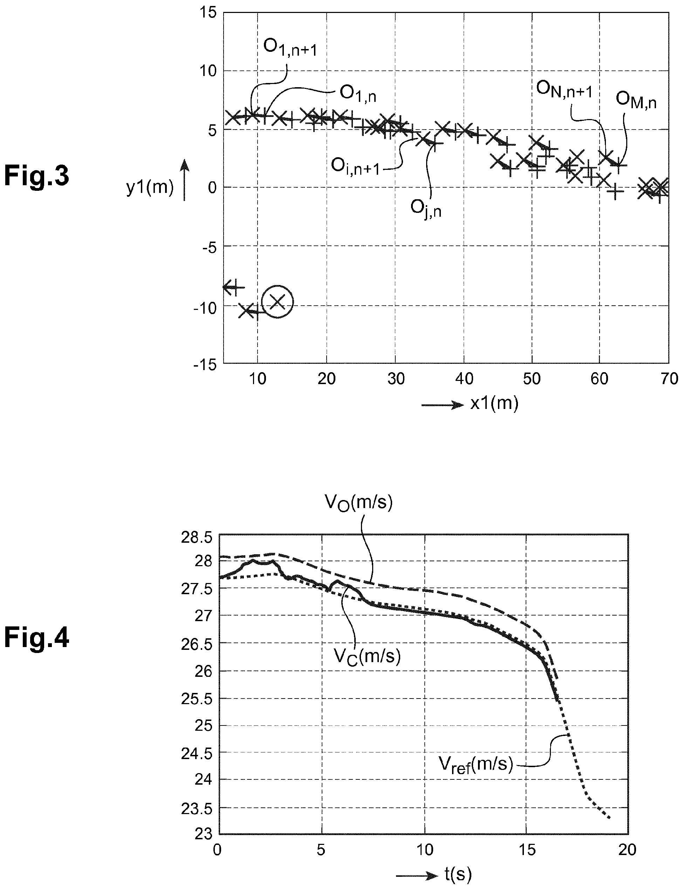

La figure 3 montre, à titre d'exemple, les positions d'éléments statiques, détectés à deux instants successifs $t_n$ et $t_{n+1}$ par le premier système radar 10A du véhicule (radar frontal). Ces deux ensembles de positions ont été déterminés dans une situation où le véhicule 1 se déplace vers l'avant, à environ 100 kilomètres par heure.

Les positions $O_{1,n}$, ..., $O_{j,n}$, ..., $O_{M,n}$ des éléments statiques détectés à l'instant précédent $t_n$ sont repérées sur cette figure par des croix en forme de signe « plus » (+). Les positions $O_{1,n+1}$, ..., $O_{i,n+1}$, ..., $O_{N,n+1}$ des éléments statiques détectés à l'instant suivant $t_{n+1}$ sont repérées quant à elles par des croix en forme de signe « multiplié » ($\times$).

Ces différentes positions sont repérées dans un repère {x1, y1} lié au véhicule 1. Ce repère est formé par l'axe longitudinal x1 du véhicule, qui s'étend de l'arrière vers l'avant du véhicule, et par un axe transversal y1, perpendiculaire à l'axe longitudinale x1 et qui s'étend ici de la droite vers la gauche du véhicule. L'axe longitudinal x1 et l'axe transversal y1 sont tous deux parallèles au plancher du véhicule.

On peut voir sur la figure 3 que, entre l'instant précédent $t_n$ et l'instant suivant $t_{n+1}$, les éléments détectés se sont rapprochés du véhicule, reflétant ainsi le déplacement vers l'avant du véhicule 1 entre ces deux instants. C'est précisément en exploitant ce décalage que le vecteur de déplacement du véhicule est déterminé (ce vecteur est représentatif du déplacement du véhicule, entre l'instant précédent $t_n$ et l'instant suivant $t_{n+1}$).

La détermination de ce vecteur de déplacement s'effectue en deux temps.

Dans un premier temps, au cours de l'étape b), l'unité de traitement 3 associe les positions précédentes $O_{1,n}$, ...,

$O_{j,n}$, ..., $O_{M,n}$ aux positions suivantes $O_{1,n+1}$, ..., $O_{i,n+1}$, ..., $O_{N,n+1}$, pour former différents couples de positions regroupant chacun la position précédente et la position suivante d'un même élément de l'environnement E du véhicule 1.

Dans un deuxième temps, à l'étape c), l'unité de traitement 3 détermine le vecteur de déplacement du véhicule par régression linéaire, à partir des positions précédentes et suivantes des couples de positions formés à l'étape b).

Les étapes b), c) et d) en question sont maintenant décrites plus en détail.

Etape b) : Association

Chaque couple de positions formé à l'étape b) comprend :

- la position précédente $O_{j,n}$ de l'un des éléments de l'environnement E détecté à l'instant précédent $t_n$, et
- l'une des positions suivantes $O_{1,n+1}$, ..., $O_{i,n+1}$, ..., $O_{N,n+1}$, identifiée comme correspondant à la position de ce même élément, à l'instant suivant $t_{n+1}$.

Parmi les différents couples de position envisageables $\{O_{j,n}, O_{i,n+1}\}$, qui regroupent chacun l'une des positions suivantes $O_{i,n+1}$ et l'une des positions précédentes $O_{j,n}$, les couples formés finalement à l'étape b) sont ceux qui sont le plus en accord avec une estimation précédente de la vitesse v du véhicule et avec une estimation précédente de sa vitesse de lacet $\omega$.

Pour identifier ces couples de positions successives, il est prévu ici :

b1) pour les différents couples de positions envisageables, de déterminer un coût individuel $D_{ij}$, associé au couple de positions envisageable $\{O_{j,n}, O_{i,n+1}\}$ considéré, en fonction de la position précédente $O_{j,n}$ et de la position suivante $O_{i,n+1}$ de ce couple de positions envisageable, et

b2) parmi différents ensembles de couples de positions envisageables, d'identifier l'ensemble de couples de positions envisageables pour lequel la valeur d'une fonction de coût F globale est la plus petite, cette fonction de coût F globale étant déterminée en fonction des coûts individuels $D_{ij}$ associés respectivement aux différents couples de positions de l'ensemble considéré.

Le coût individuel $D_{ij}$ est déterminé en outre en fonction de l'estimation précédente de la vitesse v du véhicule et, ici, en fonction de l'estimation précédente de sa vitesse de lacet $\omega$.

Les couples de positions formés finalement à l'étape b) sont les couples de positions de l'ensemble identifié par minimisation à l'étape b2).

A l'étape b1), pour chaque couple de positions envisageable $\{O_{j,n}, O_{i,n+1}\}$, avant de calculer le coût individuel $D_{ij}$ associé à ce couple de positions, l'unité de traitement 3 détermine s'il est possible, ou au contraire peu vraisemblable que ce couple de positions regroupe deux positions successives d'un même élément de l'environnement E du véhicule 1.

Ici, l'unité de traitement 3 détermine qu'il est peu vraisemblable que le couple de positions $\{O_{j,n}, O_{i,n+1}\}$ regroupe deux positions successives d'un même élément de l'environnement E du véhicule 1 lorsque l'une des conditions décrites ci-dessous est remplie. Au contraire, lorsqu'aucune de ces conditions n'est remplie, l'unité de traitement 3 détermine qu'il est possible que le couple de positions $\{O_{j,n}, O_{i,n+1}\}$ regroupe deux positions successives d'un même élément de l'environnement E du véhicule 1.

Condition 1 : un sens de déplacement du véhicule, déduit du couple de positions $\{O_{j,n}, O_{i,n+1}\}$ considéré, est opposé à un sens de déplacement du véhicule déterminé à l'instant précédent.

Condition 2 : un écart latéral, parallèlement à l'axe transversal y1 du véhicule, entre les deux positions $O_{i,n+1}$ et $O_{j,n}$ du couple considéré, est supérieur à un écart latéral maximal envisageable, alors qu'il a été déterminé précédemment que le véhicule se déplace essentiellement en ligne droite. A titre d'exemple, l'écart latéral maximal envisageable peut être égal à 1 mètre environ, lorsque l'instant précédent $t_n$ et l'instant suivant $t_{n+1}$ sont, comme ici, séparés par 0,07 seconde environ.

Condition 3 : un écart $d(O_{i,n+1}, O_{j,n})$ entre la position suivante $O_{i,n+1}$ du couple considéré, et une position extrapolée $O'_{j,n}$, déduite de la position précédente $O_{j,n}$ de ce couple, est supérieur à un écart maximal envisageable $d_{max}$.

La position extrapolée $O'_{j,n}$ en question est déterminée en décalant la position précédente $O_{j,n}$ du couple considéré, en fonction :

- d'une estimation précédente de la vitesse v du véhicule et d'une estimation précédente de sa vitesse de lacet $\omega$ (les estimations précédentes en question ayant par exemple été déterminées lors d'une exécution précédente de l'étape f), décrite plus loin), et
- de la durée $\Delta t = t_{n+1} - t_n$ entre l'instant précédent $t_n$ et l'instant suivant $t_{n+1}$.

La position extrapolée $O'_{j,n}$ est la position qu'occuperait l'élément de position précédente $O_{j,n}$, à l'instant suivant

$t_{n+1}$, si le véhicule continuait de se déplacer à la vitesse v, et avec la vitesse de lacet $\omega$, entre les instants précédents et les instants suivants. A titre d'exemple, si l'estimation précédente de la vitesse de lacet est nulle, la position extrapolée $O'_{j,n}$ est déterminée en décalant la position précédente $O_{j,n}$, vers le véhicule, parallèlement à l'axe longitudinal x1, d'une quantité égale au produit de la durée $\Delta t$ par l'estimation précédente de la vitesse v du véhicule 1.

Dans le mode de réalisation décrit ici, l'écart $d(O_{i,n+1}, O_{j,n})$ est un écart quadratique, égal au carré de la distance entre :

- la position suivante $O_{i,n+1}$ du couple considéré, et
- la position extrapolée $O'_{j,n}$, déterminée pour ce couple.

Quant à l'écart maximal envisageable $d_{max}$, sa valeur est par exemple égale au carré du produit de la durée $\Delta t$ précitée par un seuil de vitesse $v_s$. Le seuil de vitesse $v_s$ peut par exemple être compris entre 3 et 20 mètres par seconde.

Pour ce qui est maintenant de la valeur du coût individuel $D_{ij}$, lorsque l'unité de traitement 3 a déterminé qu'il est peu vraisemblable que le couple de positions $\{O_{j,n}, O_{i,n+1}\}$ regroupe deux positions successives d'un même élément de l'environnement E du véhicule 1, elle attribue alors au coût individuel $D_{ij}$ une valeur de seuil prédéterminée, égale par exemple à l'écart maximal envisageable $d_{max}$ mentionné plus haut.

Au contraire, lorsque l'unité de traitement 3 a déterminé qu'il est possible que le couple de positions $\{O_{j,n}, O_{i,n+1}\}$ regroupe deux positions successives d'un même élément de l'environnement E du véhicule 1, elle attribue alors au coût individuel $D_{ij}$ la valeur de l'écart $d(O_{i,n+1}, O_{j,n})$ mentionné plus haut : $D_{ij} = d(O_{i,n+1}, O_{j,n})$.

Ici, à l'étape b1), l'unité de traitement détermine autant de coût individuels $D_{ij}$ qu'il y a de couples de positions envisageables distincts, regroupant chacun l'une des positions précédentes $O_{1,n}, ..., O_{j,n}, ..., O_{M,n}$ et l'une des positions suivantes $O_{1,n+1}, ..., O_{i,n+1}, ..., O_{N,n+1}$. L'unité de traitement détermine donc un nombre N×M de coûts individuels, où M est le nombre de positions précédentes $O_{1,n}, ..., O_{j,n}, ..., O_{M,n}$, déterminées lors de l'exécution précédente de l'étape a), et où N est le nombre de positions suivantes $O_{1,n+1}, ..., O_{i,n+1}, ..., O_{N,n+1}$, déterminées lorsque l'étape a) est exécutée à nouveau. Ces différents coûts individuels peuvent par exemple être regroupés sous la forme d'une matrice de coût à N lignes et M colonnes, dont le coefficient d'indices i et j (coefficient de la ligne numéro i et de la colonne numéro j) est le coût individuel $D_{ij}$ associé au couple comprenant la positions suivante $O_{i,n+1}$ et la position précédente $O_{j,n}$.

Ensuite, à l'<u>étape b2)</u>, l'unité de traitement 3 identifie, parmi différents ensembles de couples de positions envisageables, celui pour lequel la valeur de la fonction de coût F globale est la plus petite.

En l'occurrence, la fonction de coût F est égale, pour chacun de ces ensembles de couples, à la somme des coûts individuels $D_{ij}$ associés aux différents couples de positions envisageables de l'ensemble considéré.

Chacun de ces ensembles de couples de positions envisageables correspond à une manière d'associer, par couples, les positions précédentes $O_{1,n}, ..., O_{j,n}, ..., O_{M,n}$ aux positions suivantes $O_{1,n+1}, ..., O_{i,n+1}, ..., O_{N,n+1}$, chaque position précédente étant associée à l'une au plus des positions suivantes.

Chaque ensemble de couples de positions envisageables peut par exemple être représenté par une matrice d'association à N lignes et M colonnes. Le coefficient $A_{ij}$ de cette matrice d'association peut alors être fixé à 1 si, pour cet ensemble de couples, la position précédente $O_{j,n}$ (d'indice j) est associée à la position suivante $O_{i,n+1}$ (d'indice i), le coefficient $A_{ij}$ étant nul sinon. Le fonction de coût F peut alors s'exprimer conformément à la formule F1 suivante :

$$F = \sum_{i=1}^{N} \sum_{j=1}^{M} D_{ij} A_{ij} \qquad (F1).$$

Parmi ces différents ensembles de couples de positions envisageables, l'unité de traitement 3 identifie celui pour lequel la fonction de coût F est minimale au moyen par exemple de l'algorithme de Kuhn-Munkres (dit aussi algorithme Hongrois). Cet algorithme permet en effet de trouver l'ensemble de couples (parfois appelé « couplage » dans la littérature) qui minimise la somme de coûts individuels associés aux différents couples envisageables. Dans la littérature spécialisée, lorsque l'algorithme est décrit en s'appuyant sur une représentation en graphes, ces couples sont parfois désignés comme des « arrêtes » reliant les deux éléments du couple considéré (ici les deux éléments reliés par l'une de ces « arrêtes » sont donc la position précédente et la position suivante du couple de positions en question). Pour ce qui est du coût individuel de chaque couple (qui est calculé ici de manière particulièrement originale), il est parfois appelé « poids » de l'arrête dans la littérature spécialisée.

Au cours de l'étape b) qui vient d'être décrite, le fait d'associer les positions précédentes aux positions suivantes avec pour critère l'écart entre positions suivantes et positions <u>extrapolées</u> conduit à une association nettement plus précise et robuste que si cette association était basée sur un écart entre positions suivantes et positions précédentes. L'association obtenue est notamment plus fiable que celle employée usuellement dans la méthode dite « ICP » mentionnée plus haut, où chaque position précédente est simplement associée à celle des positions suivantes qui en est la plus proche, sans tenir compte d'une estimation précédente d'une vitesse de déplacement ou d'un vecteur de déplacement.

Par ailleurs, déterminer s'il est possible, ou au contraire peu vraisemblable qu'un couple de positions donné regroupe deux positions successives d'un même élément de l'environnement du véhicule, avant de calculer le coût individuel $D_{ij}$ associé à ce couple, permet de réduire le temps de calcul nécessaire pour exécuter l'étape b) d'association. En effet, grâce à cette disposition, lorsque la condition 1 ou la condition 2 est vérifiée, ce qui indique clairement que le couple considéré ne regroupe pas deux positions successives d'un même élément, on évite de calculer inutilement l'écart d entre la position suivante et la position extrapolée de ce couple.

Par ailleurs, limiter la valeur du coût individuel $D_{ij}$ à la valeur de seuil $d_{max}$, pour les couples de positions dont il est peu vraisemblable qu'ils regroupent deux positions successives d'un même élément, permet d'éviter que ces couples de positions n'aient une influence prédominante dans la fonction de coût F (du fait de la valeur élevée de l'écart d, pour ces couples). Cela permet d'associer les positions suivantes aux positions précédentes selon le meilleur consensus d'ensemble, quitte à ce que l'ensemble de couples de positions formés ainsi comprenne quelques couples de positions « aberrants ». Ces couples de positions aberrants seront ensuite écartés lors de l'étape de régression linéaire c).

Pour l'exemple de positions suivantes et précédentes visible sur la figure 3, on a représenté les couples de positions formés à la l'étape b) sous la forme de traits, reliant chacun l'une des positions précédentes $O_{j,n}$ à la position suivante $O_{i,n+1}$ à laquelle elle est associée.

Pour cet exemple, on constate que certaines positions, suivantes ou précédentes, ne sont pas associées en couple, à l'issu de l'étape b). Les positions non associées peuvent par exemple être des positions d'éléments de l'environnement détectés à l'instant suivant, mais pas à l'instant précédent, comme c'est le cas de position entourée d'un cercle sur la figure 3. Plus généralement, les positions non associées correspondent à des positions pour lequel il n'a pas été trouvé de position voisine compatible avec l'estimation précédente de la vitesse du véhicule et de sa vitesse de lacet.

Etape c) : régression linéaire

Le déplacement du véhicule 1, entre l'instant précédent $t_n$ et l'instant suivant $t_{n+1}$, correspond à un mouvement dit « de corps solide », et se décompose donc en :

- un mouvement de translation, caractérisé par le vecteur de déplacement $T=(t_x, t_y)^T$ (les quantités $t_x$ et $t_y$ sont les composantes du vecteur de déplacement T dans le repère {x1, y1} lié au véhicule), et
- une rotation autour de l'axe z1, d'un angle de rotation $\theta$, correspondant à la variation de l'angle de cap du véhicule entre l'instant précédent $t_n$ et l'instant suivant $t_{n+1}$.

A l'étape c), l'unité de traitement 3 détermine le vecteur de déplacement T et l'angle de rotation $\theta$, en déterminant par régression linéaire le mouvement « de corps solide », c'est-à-dire la translation d'ensemble et la rotation d'ensemble, qui, pour les couples de positions formés à l'étape b), permet de mettre en correspondance lesdites positions précédentes $(O_{j,n})$ avec lesdites positions suivantes $(O_{i,n+1})$, c'est-à-dire qui permet de transformer sensiblement les positions suivantes $O_{i,n+1}$ en les positions précédentes $O_{j,n}$, ou l'inverse.

Ici, les caractéristiques de cette translation d'ensemble et de cette rotation d'ensemble sont déterminées plus précisément de manière à minimiser, pour une partie au moins des couples de positions formés à l'étape b) une moyenne $e_m$ d'un écart e entre :

- la position précédente $O_{j,n}$ du couple de position considéré, et
- une position transformée, obtenue en appliquant à la position suivante $O_{i,n+1}$ de ce couple lesdites translation et la rotation d'ensemble.

L'unité de traitement 3 détermine alors que le vecteur de déplacement T du véhicule 1 est égal au vecteur de translation caractérisant cette translation d'ensemble, et que son angle de rotation $\theta$ est égal à l'angle de la rotation d'ensemble déterminée par régression linéaire (cette rotation est elle aussi une rotation autour de l'axe z1).

Comme déjà indiqué, les couples de positions formés à l'étape b) peuvent comprendre quelques couples de positions aberrants, pour lequel la position suivante du couple ne peut être transformée en sa position précédente que par une transformation très différente de la translation et de la rotation d'ensemble mentionnées ci-dessus.

Pour éviter que ces couples de positions aberrants n'influencent le vecteur de déplacement T et l'angle de rotation $\theta$ déterminés à l'étape c), les caractéristiques de la rotation et de la translation d'ensemble sont identifiées par une procédure itérative de régression linéaire de type « RANSAC » (selon l'acronyme anglo-saxon de « RANdom SAmple Consensus », ou « consensus par échantillonnage aléatoire »).

Ainsi, l'unité de traitement 3 est programmée pour, à l'étape c), exécuter plusieurs fois successivement l'ensemble d'étapes c1) à c5) décrit ci-dessous.

A l'étape c1), au moins trois couples de positions sont sélectionnés aléatoirement parmi les couples de positions formés à l'étape b).

A l'étape c2) suivante, l'unité de traitement 3 détermine une première translation d'ensemble et une première rotation d'ensemble, par régression linéaire, à partir des positions précédentes et suivantes des couples de positions sélectionnés à l'étape c1). Ces premières translation et rotation sont déterminées de manière à transformer les positions suivantes de ces couples en des positions qui soient, en moyenne, aussi proches que possible de leurs positions précédentes.

A l'étape c3), pour chaque couple de positions, formé à l'étape b) et qui n'a pas été sélectionné à l'étape c1), il est prévu :

- de transformer la position suivante $O_{i,n+1}$ de ce couple en une première position transformée $O^{t1}_{i,n+1}$, en appliquant à la position suivante $O_{i,n+1}$ en question la première translation et la première rotation d'ensemble déterminées à l'étape c2), et
- de déterminer un résidu associé à ce couple, égal ici à un écart e1 (par exemple un écart quadratique) entre la position précédente du couple considéré, et la première position transformée $O^{t1}_{i,n+1}$.

A l'étape c4), l'unité de traitement 3 sélectionne un sous-ensemble de couples de positions comprenant :

- les couples de positions sélectionnés à l'étape c1), et
- les couples de positions, formés à l'étape b), qui n'ont pas été sélectionnés à l'étape c1), et pour lesquels ledit résidu est inférieur à une limite donnée (cette limite étant par exemple égale à l'écart maximal envisageable $d_{max}$ mentionné plus haut).

L'unité de traitement détermine ensuite une deuxième translation d'ensemble et d'une deuxième rotation d'ensemble, par régression linéaire, sur la base des positions précédentes et des positions suivantes des couples de ce sous-ensemble. A nouveau, les deuxièmes translation et rotation sont déterminées de manière à transformer les positions suivantes des couples considérés en des positions qui soient, en moyenne, aussi proches que possible de leurs positions précédentes.

Ensuite, à l'étape c5), l'unité de traitement 3 détermine une précision avec laquelle la deuxième translation et la deuxième rotation transforment :

- les positions précédentes des couples du sous-ensemble de couple sélectionné à l'étape c4), en
- l'ensemble des positions suivantes de ces couples.

Pour cela, l'unité de traitement peut par exemple calculer la valeur moyenne $e_m$, sur ce sous-ensemble de couples, de l'écart e entre :

- la position précédente $O_{j,n}$ du couple de position considéré, et
- une deuxième position transformée $O^{t2}_{j,n}$, obtenue en appliquant à la position suivante $O_{i,n+1}$ de ce couple la deuxième translation et la deuxième rotation d'ensemble déterminées à l'étape c4).

Après avoir exécuté plusieurs fois l'ensemble des étapes c1) à c5), l'unité de traitement 3 sélectionne, parmi les deuxièmes translations et rotations d'ensemble qui ont été déterminées, celles pour lesquelles ladite précision est la meilleure, c'est-à-dire, par exemple, celles pour lesquelles la valeur moyenne $e_m$ de l'écart e est la plus petite.

Les caractéristiques de la translation d'ensemble et de la rotation d'ensemble finalement retenues à l'étape c) sont celles de la deuxième translation et de la deuxième rotation sélectionnées ainsi par l'unité de traitement 3.

Le détail de l'opération de régression linéaire en elle-même, exécutée à l'étape c2) et c4), ne fait pas partie à proprement parler de l'invention, et n'a donc pas été décrit en détail ici. Cette opération peut par exemple être réalisée conformément à la méthode décrite dans l'article suivant : « Least-squares fitting of two 3-d point sets », S. Arun, T. S. Huang, et S. D. Blostein, IEEE Transactions on pattern analysis and machine intelligence, no. 5, pp. 698-700, 1987.

Etape d)

A l'étape d), l'unité de traitement 3 détermine la première estimation $v_{1A}$ de la vitesse du véhicule 1, ainsi qu'une première estimation $\omega_{1A}$ de sa vitesse de lacet, en fonction du vecteur de déplacement T et de l'angle de rotation θ déterminés à l'étape c).

La vitesse v du véhicule 1 désigne ici la vitesse algébrique du véhicule par rapport à la voie de circulation 2. Autrement formulé, il s'agit de la norme de son vecteur vitesse, affectée du signe plus si le véhicule se déplace vers l'avant, et du signe moins sinon.

Aussi, à l'étape d), la première estimation $v_{1A}$ de la vitesse du véhicule 1 est déterminée en calculant la norme du vecteur de déplacement T, affectée du signe de la composante $t_x$ de ce vecteur, et en divisant le tout par la durée $\Delta t$ entre les instants suivant et précédent :

$$v_{1A} = \text{sign}(t_x) \sqrt{t_x^2 + t_y^2} \, / \, \Delta t \qquad (F2) \,.$$

La première estimation $\omega_{1A}$ de sa vitesse de lacet est déterminée quant à elle en divisant l'angle de rotation $\theta$ par la durée $\Delta t$.

Par ailleurs, à l'étape d), l'unité de traitement 3 détermine une incertitude $\sigma_v$, associée à la première estimation $v_{1A}$ de la vitesse du véhicule. Cette incertitude est représentative de la précision avec laquelle la transformation « de corps solide », identifiée à l'étape c), transforme les positions précédentes des éléments détectés en leurs positions suivantes. Cette incertitude $\sigma_v$ est déterminée par exemple en fonction de la valeur moyenne $e_m$ de l'écart e entre positions transformées et positions précédentes.

L'ensemble des étapes a) à d) qui viennent d'être décrites est exécuté plusieurs fois successivement, aux différents pas de temps $t_n$, $t_{n+1}$, $t_{n+2}$, .....

Ainsi, chaque fois que l'étape a) est exécutée à nouveau, les étapes b), c) puis d) sont elles aussi exécutées à nouveau pour déterminer les valeurs, à l'instant $t_{n+1}$ considéré, des premières estimations $v_{1A}$ et $\omega_{1A}$ de la vitesse du véhicule 1 et de sa vitesse de lacet.

D'autre part, comme déjà indiqué, le traitement des données provenant des deuxième et troisième systèmes radar 10B et 10C est comparable à celui décrit ci-dessus dans le cas du premier système radar 10A. Ainsi, au cours de ce procédé, l'unité de traitement 3 détermine aussi, à plusieurs instants successifs, les valeurs des premières estimations $v_{1B}$ et $v_{1C}$ de la vitesse du véhicule 1, ainsi que celles de premières estimations $\omega_{1B}$ et $\omega_{1C}$ de sa vitesse de lacet.

Détermination de la vitesse et de la position du véhicule par fusion des données radar et des données odométriques

Comme déjà indiqué, la fusion de données effectuée à l'étape f) est réalisée au moyen d'un filtre de Kalman particulier.

L'étape f) comprend donc une étape f1) de propagation (appelée aussi étape de prédiction), et une étape f2) de mise à jour (appelée aussi étape de recalage, ou étape d'observation), exécutées plusieurs fois successivement, de manière itérative.

Au cours de l'étape f1), une nouvelle estimation $[x]_{k+1}$ d'un vecteur d'état $[x]$ du véhicule 1 est déterminée, en fonction d'une estimation précédente $[x]_{k,c}$ de ce vecteur d'état et d'un modèle de "propagation", qui modélise la dynamique de déplacement du véhicule. En l'occurrence, l'estimation précédente du vecteur d'état, $[x]_{k,c}$, est une estimation corrigée, déterminée lors d'une exécution précédente de l'étape f2) de mise à jour.

Au cours de l'étape f2), l'estimation du vecteur d'état $[x]_{k+1}$, qui a été déterminée à l'étape f1), est recalée en fonction de différentes "mesures", relatives à l'état du véhicule, pour obtenir une nouvelle estimation corrigée du vecteur d'état du véhicule, $[x]_{k+1,c}$.

Ces mesures (parfois appelées "observations") sont issues des capteurs qui ont été présentés plus haut, 4, 5A, 5B, 5C, 5D, 7, 10A, 10B et 10C. Elles comprennent ici :

- les premières estimations $v_{1A}$, $v_{1B}$, $v_{1C}$ de la vitesse du véhicule 1, déterminées à partir des données acquises par les systèmes radar 10A, 10B, 10C, ainsi que les premières estimations $\omega_{1A}$, $\omega_{1B}$ et $\omega_{1C}$ de la vitesse de lacet du véhicule,
- les vitesses de déplacement des roues $v_{fl}$, $v_{fr}$, $v_{rl}$ et $v_{rr}$, déterminées à partir des données acquises par les capteurs de vitesse de rotation 5A, 5B, 5C, 5D,
- une mesure de l'angle de braquage, $\delta^m$, déterminée au moyen du capteur d'angle de braquage 7,
- une mesure de la vitesse de lacet, $\omega^m$, et une mesure de l'accélération longitudinale du véhicule, $a^m_x$, délivrées par l'unité de mesure inertielle 4.

Quant au vecteur d'état $[x]$ du véhicule, il comprend ici les composantes suivantes:

- une coordonnée X et une coordonnée Y repérant la position du véhicule 1 dans un repère {x,y} fixe par rapport à l'environnement E du véhicule (fixe par rapport à la voie de circulation 2),
- un angle de cap $\alpha$, formé ici entre l'axe longitudinal x1 du véhicule et l'axe x du repère fixe {x,y},
- la vitesse v du véhicule 1 par rapport à la voie de circulation 2,
- une accélération a du véhicule 1 (norme de son vecteur accélération, affectée d'un signe),
- l'angle de braquage $\delta$,
- un facteur d'échelle f, représentatif d'un écart entre le rayon nominal des roues 6A, 6B, 6C, 6D et un rayon effectif, moyen, de ces roues, et

- un biais b affectant les mesures de la vitesse de lacet $\omega$ réalisées par l'unité de traitement inertielle 4.

Inclure le facteur d'échelle f dans le vecteur d'état du véhicule, et estimer sa valeur permet, lors de la comparaison de l'estimation de la vitesse $v_k$ avec l'une des vitesses de déplacement des roues $v_{fl}$, $v_{fr}$, $v_{rl}$, $v_{rr}$, de tenir compte de variations éventuelles du rayon effectif des roues. Ces variations peuvent être dues par exemple à une variation de la pression dans les pneumatiques des roues, ou à une variation de leur température. Il est intéressant de tenir compte de ces variations, car, en cas d'écart entre le rayon de l'une des roues et le rayon nominal préenregistré, la vitesse de déplacement de la roue, délivrée par le capteur de vitesse de rotation correspondant, est entachée d'une erreur, systématique, d'autant plus grande que la vitesse du véhicule est grande. En pratique, le rayon effectif des roues (qui correspond au rayon moyen, présenté effectivement par les roues du véhicule à l'instant considéré) peut couramment s'écarter de quelques pourcents de leur rayon nominal, et il est donc souhaitable d'en tenir compte.

Le modèle de propagation employé ici à l'étape f1) est un modèle dit "à angle de braquage et accélération constants" (ou CSAA, selon l'acronyme anglo-saxon de "Constant Steering Angle and Acceleration). Dans ce modèle, il est supposé que, entre deux pas de temps successifs, l'accélération a et l'angle de braquage $\delta$ sont constants. Par ailleurs, dans ce modèle, la vitesse de lacet $\omega$ est égale à la quantité suivante :

$$\omega = v \cdot \tan(\delta) / L \qquad (F3)$$

où L est l'empâtement du véhicule, c'est-à-dire la distance entre son essieu avant et son essieu arrière.

A l'étape f1), pour déterminer la nouvelle estimation du vecteur d'état $[x]_{k+1}$, on suppose donc que le vecteur d'état $[x]$ a évolué, depuis la détermination de l'estimation corrigée précédente $[x]_{k,c}$, conformément à la formule F4 suivante :

$$[\dot{x}] = \begin{bmatrix} \dot{X} \\ \dot{Y} \\ \dot{\alpha} \\ \dot{v} \\ \dot{a} \\ \dot{\delta} \\ \dot{f} \\ \dot{b} \end{bmatrix} = \begin{bmatrix} v.\cos(\alpha) \\ v.\sin(\alpha) \\ v.\tan(\delta) / L \\ a \\ 0 \\ 0 \\ 0 \\ 0 \end{bmatrix} \qquad (F4).$$

Les différents capteurs du véhicule fonctionnent ici de manière asynchrone. Ainsi, les différentes mesures mentionnées ci-dessus sont déterminées en général à des instants différents, et ne sont pas toutes disponibles en même temps.

L'étape f2) est donc exécutée ici, après chaque exécution de l'étape f1), dès que l'une de ces mesures est disponible, en recalant l'estimation du vecteur d'étant sur la base de cette mesure.

Ainsi, à titre d'exemple, dans une situation où les capteurs délivreraient d'abord les mesures $\omega^m$ et $a^m_x$ de la vitesse de lacet et de l'accélération longitudinale, puis, ultérieurement, les vitesses de déplacement des roues $v_{fl}$, $v_{fr}$, $v_{rl}$, $v_{rr}$, la séquence d'exécution des étapes f1) et f2) serait la suivante :

- exécution de l'étape f2), pour recaler l'estimation du vecteur d'état $[x]$, sur la base des mesures $\omega^m$ et $a^m_x$ (dès que ces mesures sont disponibles), puis
- exécution de l'étape de f1) de propagation, puis
- à nouveau, exécution de l'étape f2), mais en recalant l'estimation du vecteur d'état $[x]$ sur la base des vitesses de déplacement des roues $v_{fl}$, $v_{fr}$, $v_{rl}$ et $v_{rr}$, puis
- à nouveau, exécution de l'étape de f1) de propagation, et ainsi de suite.

De manière remarquable, à l'étape f2), les premières estimations $v_{1A}$, $v_{1B}$, $v_{1C}$ de la vitesse du véhicule 1, qui peuvent présenter des fluctuations mais qui s'avèrent sans biais, sont employées pour recaler l'estimation du facteur d'échelle $f_k$, afin de tenir compte d'un écart éventuel entre le rayon effectif des roues et leur rayon nominal.

Pour réaliser ce recalage, chaque fois que l'une des premières estimations $v_{1A}$, $v_{1B}$, $v_{1C}$ de la vitesse du véhicule 1 a été déterminée, une mesure du facteur d'échelle en est déduite. Ainsi, par exemple, lorsqu'une nouvelle valeur de la première estimation $v_{1A}$ est disponible, une nouvelle valeur de la mesure du facteur d'échelle, $f^m$, est déterminée conformément à la formule suivante :

$$f^m = 1 - \frac{v_{1A}}{v_k(1 - f_k)} + \sigma_f \qquad (F5)$$

où $\sigma_f$ est une déviation, fonction de l'incertitude $\sigma_v$ associée à la première estimation $v_{1A}$ de la vitesse du véhicule.

Cette nouvelle valeur de la mesure du facteur d'échelle $f^m$ est ensuite employée pour recaler l'estimation précédente du facteur d'échelle, $f_k$, selon la technique usuelle pour un filtre de Kalman, c'est-à-dire en déterminant un gain de correction (appelé parfois gain de Kalman), et puis en calculant l'estimation corrigée $f_{k+1,c}$ en ajoutant à l'estimation précédente $f_k$ un terme correctif, égal au gain de Kalman multiplié par la différence entre la mesure du facteur d'échelle $f^m$ et l'estimation précédente $f_k$.

D'autre part, lorsque l'estimation de la vitesse $v_k$, est recalée sur la base de l'une des vitesses de déplacement des roues $v_{fl}$, $v_{fr}$, $v_{rl}$, $v_{rr}$, il est tenu compte, par l'intermédiaire du facteur d'échelle f, du fait que le rayon effectif des roues n'est pas forcément exactement égal à leur rayon nominal préenregistré.

Pour cela, dans le modèle d'observation employé à l'étape f2), on suppose que la vitesse de déplacement de la roue avant gauche $v_{fl}$ est une mesure de la quantité suivante :

$$v_k \left( 1 - \frac{l_f}{2} \frac{\tan(\delta_k)}{L} \right) \frac{1}{\cos(\delta_k)} + f_k \cdot v_k \qquad (F6)$$

où $l_r$ est la distance entre les deux roues avant 6A et 6B.

Ainsi, l'estimation précédente de la vitesse du véhicule, $v_k$, est en quelque sorte compensée préalablement, en fonction du facteur d'échelle f, avant d'être comparée à la mesure $v_{fl}$, pour tenir compte de l'erreur systématique affectant cette mesure.

De manière comparable, dans ce filtre de Kalman, la vitesse de déplacement de la roue avant droite $v_{fl}$ est employée en tant que mesure de la quantité suivante :

$$v_k \left( 1 + \frac{l_f}{2} \frac{\tan(\delta_k)}{L} \right) \frac{1}{\cos(\delta_k)} + f_k \cdot v_k \qquad (F7).$$

La vitesse de déplacement de la roue arrière gauche $v_{rl}$ est employée quant à elle en tant que mesure de la quantité suivante :

$$v_k \left( 1 - \frac{l_r}{2} \frac{\tan(\delta_k)}{L} \right) + f_k \cdot v_k \qquad (F8)$$

où $l_r$ est la distance entre les deux roues arrière 6C et 6D.

Et la vitesse de déplacement de la roue arrière droite $v_{rr}$ est employée en tant que mesure de la quantité suivante :

$$v_k \left( 1 + \frac{l_r}{2} \frac{\tan(\delta_k)}{L} \right) + f_k \cdot v_k \qquad (F9).$$

Ainsi, chaque fois qu'une nouvelle valeur de la vitesse de déplacement de l'une des roues est déterminée, l'unité de traitement recale l'estimation du vecteur d'état du véhicule $[x]_{k+1}$ en fonction de l'écart entre :

- la mesure considérée $v_{fl}$, $v_{fr}$, $v_{rl}$ ou $v_{rr}$, et
- la quantité correspondante mentionnée ci-dessus.

Finalement, après chaque exécution de l'étape f2), l'unité de traitement 3 délivre les estimations corrigées $X_{k+1,c}$, $Y_{k+1,c}$ et $v_{k+1,c}$ de la position et de la vitesse du véhicule, notées plus simplement $X_c$, $Y_c$ et $v_c$ sur les figures.

Le filtre de Kalman particulier employé ici, pour fusionner les données provenant des systèmes radar avec celles provenant des capteurs de vitesse de rotation, permet de corriger très efficacement les sources d'erreurs affectant les mesures.

En effet, au lieu de corriger les vitesses de déplacement $v_{fl}$, $v_{fr}$, $v_{rl}$, $v_{rr}$ en les comparant directement aux premières estimations « radar » $v_{1A}$, $v_{1B}$ et $v_{1C}$ (comme si elles étaient affectées seulement par un biais constant), on tient compte ici, via le facteur d'échelle f, du fait que ces vitesses « odométriques » $v_{fl}$, $v_{fr}$, $v_{rl}$, $v_{rr}$ sont entachées d'une erreur variable, d'autant plus grande que la vitesse du véhicule est grande (puisque cette erreur provient d'une variation du rayon moyen des roues). Recaler la valeur de ce facteur d'échelle f sur la base des premières estimations « radar » de la vitesse de déplacement, qui peuvent présenter des fluctuations mais qui s'avèrent sans biais, permet alors une correction stable des erreurs affectant les vitesses de déplacement des roues $v_{fl}$, $v_{fr}$, $v_{rl}$, $v_{rr}$, alors même que ces erreurs varient avec la vitesse du véhicule.

Exemple de résultats

La figure 4 représente schématiquement, pour un exemple de trajet, l'évolution au cours du temps t de l'estimation corrigée de la vitesse du véhicule, $v_c$, déterminée grâce au procédé qui vient d'être décrit. Pour cet exemple de trajet, le véhicule 1 se déplace sensiblement en ligne droite, et sa vitesse v est comprise entre 80 et 100 kilomètres par heure.

A titre de comparaison une vitesse de référence du véhicule, $v_{ref}$, est représentée aussi sur la figure 4, pour le même trajet. Cette vitesse de référence a été mesurée au moyen d'un capteur de référence particulièrement fiable (en l'occurrence un capteur de modèle RT3000, du fabricant OXTS), équipant temporairement le véhicule lors de cet essai. Cette vitesse de référence $v_{ref}$ correspond à la vitesse réelle du véhicule, v, avec une précision meilleure que 0,03 mètre par seconde.

Par ailleurs, une estimation de base de la vitesse du véhicule, notée $v_o$, est également représentée sur la figure 4. Cette estimation de base a été déterminée en fonction des données délivrées par l'unité de mesure inertielle 4 et par les capteurs de vitesse de rotation 5A, 5B, 5C, 5D, mais sans tenir compte des données fournies par les systèmes radar 10A, 10B, 10C.

Comme on peut le voir sur cette figure, l'estimation corrigée de la vitesse du véhicule $v_c$, obtenue par le procédé décrit plus haut, est très proche de la valeur réelle de la vitesse v du véhicule. On constate par ailleurs que la prise en compte des données fournies par les systèmes radar 10A, 10B, 10C, telle qu'elle a été décrite ci-dessus, permet d'améliorer nettement la précision avec laquelle la vitesse du véhicule est déterminée, puisque l'estimation corrigée $v_c$ est nettement plus proche de la vitesse de référence $v_{ref}$ que l'estimation de base $v_o$.

Différentes variantes peuvent être apportées au procédé et au véhicule qui ont été décrits ci-dessus.

Par exemple, le nombre de systèmes radar qui équipent le véhicule pourrait être différent, et ces systèmes radars pourraient positionnés ou orientés différemment. Le véhicule pourrait d'ailleurs être équipé d'un seul système radar.

Par ailleurs, lors de l'étape d'association b), le coût individuel associé à chaque couple de positions pourrait être calculé en utilisant une fonction quelconque, croissante en fonction de l'écart d entre la position extrapolée et la position précédente du couple considéré, au lieu d'être égal directement à cet écart *d*.

## Revendications

1.  Procédé de détermination d'un vecteur de déplacement (T) d'un véhicule (1) automobile, comprenant une étape a) de détermination, par un système radar (10A, 10B, 10C) équipant le véhicule (1), de positions, par rapport au véhicule (1), à un instant donné, d'éléments d'un environnement (E) du véhicule (1) statiques par rapport à une voie de circulation (2) sur laquelle se déplace le véhicule,
    dans lequel, l'étape a) ayant été exécutée à un instant précédent ($t_n$) pour déterminer les positions précédentes ($O_{j,n}$) desdits éléments par rapport au véhicule (1), l'étape a) est exécutée à nouveau à un instant suivant ($t_{n+1}$) pour déterminer les positions suivantes ($O_{i,n+1}$) desdits éléments par rapport au véhicule (1), le procédé étant **caractérisé en ce qu'**il comprend en outre les étapes suivantes :

    b) associer lesdites positions précédentes ($O_{j,n}$) auxdites positions suivantes ($O_{i,n+1}$) pour former différents couples de positions regroupant chacun la position précédente et la position suivante d'un même élément de l'environnement du véhicule, cette étape b) comprenant les étapes suivantes :

    b1) pour différents couples de positions envisageables regroupant chacun l'une des positions suivantes ($O_{i,n+1}$) et l'une des positions précédentes ($O_{j,n}$), déterminer un coût individuel ($D_{ij}$), associé au couple de positions envisageable considéré, en fonction de la position précédente ($O_{j,n}$) et de la position suivante ($O_{i,n+1}$) de ce couple de positions envisageable, et
    b2) parmi différents ensembles de couples de positions envisageables, identifier l'ensemble pour lequel la valeur d'une fonction de coût (F) globale est la plus petite, cette fonction de coût (F) globale étant déterminée en fonction des coûts individuels ($D_{ij}$) associés respectivement aux différents couples de positions de l'ensemble considéré,
    les couples de positions formés finalement à l'étape b) étant les couples de positions de l'ensemble ainsi identifié à l'étape b2), et

c) déterminer par régression linéaire les caractéristiques (T, θ) respectives d'une translation et d'une rotation de l'ensemble identifié à l'étape b2) permettant, pour les couples de positions formés à l'étape b), de mettre en correspondance lesdites positions précédentes ($O_{j,n}$) avec lesdites positions suivantes ($O_{i,n+1}$), et déterminer le vecteur de déplacement (T) du véhicule (1) en fonction des caractéristiques desdites translation et rotation.

2. Procédé selon la revendication 1, dans lequel l'étape b1) comprend, pour l'un au moins des couples de positions envisageables, les opérations suivantes :

- décaler la position précédente ($O_{j,n}$), en fonction d'une estimation de la vitesse de déplacement du véhicule ($v_c$), et de la durée ($\Delta t$) entre lesdits instants précédent et suivant, pour obtenir une position extrapolée ($O'_{j,n}$),
- déterminer un écart entre la position suivante ($O_{i,n+1}$) et ladite position extrapolée ($O'_{j,n}$), et
- déterminer le coût individuel ($D_{ij}$) associé à ce couple de positions, de manière ce qu'il soit d'autant plus grand que ledit écart est grand.

3. Procédé selon la revendication 2, dans lequel, à l'étape b1), pour une partie au moins des couples de positions envisageables :

- préalablement au calcul du cout individuel ($D_{ij}$) associé au couple de positions envisageable considéré, il est déterminé s'il est possible, ou au contraire peu vraisemblable que ce couple regroupe deux positions successives d'un même élément de l'environnement du véhicule, et
- lorsqu'il a été déterminé qu'il est peu vraisemblable que ce couple regroupe deux positions successives d'un même élément de l'environnement du véhicule, on attribue audit coût individuel ($D_{ij}$) une valeur de seuil prédéterminée ($d_{max}$).

4. Procédé selon la revendication 3 dans lequel, à l'étape b1), il est déterminé qu'il est peu vraisemblable que le couple de positions envisageable considéré regroupe deux positions successives d'un même élément de l'environnement du véhicule lorsque l'une des conditions suivantes est remplie :

- ledit écart est supérieur à un écart maximal envisageable,
- un sens de déplacement du véhicule, déduit du couple de positions envisageable considéré, est opposé à un sens de déplacement du véhicule déterminé précédemment,
- un écart latéral par rapport à un axe longitudinal de déplacement du véhicule, déduit du couple de positions envisageable considéré, est supérieur à un écart latéral maximal envisageable.

5. Procédé selon l'une des revendications 1 à 4, dans lequel l'étape c) comprend les étapes suivantes :

c1) sélectionner aléatoirement, parmi les couples de positions formés à l'étape b), au moins trois couples de positions,
c2) déterminer une première translation et une première rotation de l'ensemble identifié à l'étape b2), par régression linéaire à partir des couples de positions sélectionnés à l'étape c1),
c3) pour chaque couple de positions, formé à l'étape b) et qui n'a pas été sélectionné à l'étape c1) :

- transformer la position suivante ($O_{i,n+1}$) en une position transformée ($O^{t1}_{i,n+1}$), en appliquant à la position suivante ($O_{i,n+1}$) la première translation et la première rotation déterminées à l'étape c2), et
- déterminer un résidu, en fonction d'une distance entre ladite position transformée ($O^{t1}_{i,n+1}$) et la position précédente ($O_{j,n}$) de ce couple,

c4) sélectionner un sous-ensemble de couples de positions comprenant :

- les couples de positions sélectionnés à l'étape c1), et
- les couples de positions, formés à l'étape b), qui n'ont pas été sélectionnés à l'étape c1), et pour lesquels ledit résidu est inférieur à une limite donnée, et

déterminer une deuxième translation et d'une deuxième rotation, par régression linéaire, sur la base des positions précédentes ($O_{j,n}$) et des positions suivantes ($O_{i,n+1}$) des couples de ce sous-ensemble, et
c5) évaluer avec quelle précision la deuxième translation et la deuxième rotation transforment les positions suivantes des couples des positions de ce sous-ensemble, en les positions précédentes de ces couples, l'ensemble des étapes c1) à c5) étant exécuté plusieurs fois successivement,

les caractéristiques (T, θ) de la translation et de la rotation déterminées finalement à l'étape c) étant les caractéristiques de la deuxième translation et de la deuxième rotation qui permettent de transformer lesdites positions suivantes ($O_{i,n+1}$) en lesdites positions précédentes ($O_{j,n}$) avec le plus de précision.

6. Procédé de détermination d'une vitesse (v) de déplacement d'un véhicule (1) automobile, dans lequel un vecteur de déplacement (T) du véhicule (1) est déterminé conformément au procédé selon l'une quelconque des revendications 1 à 5, le procédé de détermination de la vitesse du véhicule comprenant en outre les étapes suivantes :

d) déterminer une première estimation ($v_{1A}$, $v_{1B}$, $v_{1C}$) de la vitesse du véhicule à partir du vecteur de déplacement (T) du véhicule déterminé à l'étape c),
e) déterminer une deuxième estimation ($v_{fl}$, $v_{fr}$, $v_{rl}$, $v_{rr}$) de la vitesse du véhicule, en fonction d'une vitesse de rotation d'une roue (6A, 6B, 6C, 6D) du véhicule (1) acquise par un capteur de vitesse de rotation (5A, 5B, 5C, 5D), et
f) déterminer la vitesse (v) du véhicule, en fonction de la première estimation ($v_{1A}$, $v_{1B}$, $v_{1C}$) de cette vitesse et de la deuxième estimation ($v_{fl}$, $v_{fr}$, $v_{rl}$, $v_{rr}$) de cette vitesse, au moyen d'un filtre de Kalman configuré pour exécuter les étapes suivantes :

f1) déterminer une nouvelle estimation d'un vecteur d'état du véhicule, comprenant des composantes représentatives notamment de la vitesse et d'une accélération du véhicule,
f2) déterminer une estimation corrigée du vecteur d'état du véhicule, en recalant l'estimation de ce vecteur d'état déterminée à l'étape f1) sur la base des première et deuxième estimations de la vitesse du véhicule ($v_{1A}$, $v_{1B}$, $v_{1C}$, $v_{fl}$, $v_{fr}$, $v_{rl}$, $v_{rr}$) déterminées aux étapes d) et e),

les étapes f1) et f2) étant exécuté plusieurs fois successivement, et, lorsque l'étape f1) est exécutée à nouveau, ladite nouvelle estimation du vecteur d'état du véhicule est déterminée en fonction de l'estimation corrigée déterminée lors de l'exécution précédente de l'étape f2).

7. Procédé selon la revendication 6, dans lequel :

- la deuxième estimation ($v_{fl}$, $v_{fr}$, $v_{rl}$, $v_{rr}$) de la vitesse de déplacement du véhicule est déterminée en fonction en outre d'un rayon nominal de ladite roue, dont la valeur est préenregistrée dans le véhicule,
- l'une des composantes du vecteur d'état du véhicule estimé par le filtre de Kalman est un facteur d'échelle ($f$), représentatif d'un écart entre ledit rayon nominal et un rayon effectif des roues du véhicule, et dans lequel
- à l'étape f2), l'estimation de la vitesse du véhicule ($v_k$) qui a été déterminée à l'étape f1) est comparée à la deuxième estimation ($v_{fl}$, $v_{fr}$, $v_{rl}$, $v_{rr}$) de la vitesse du véhicule en tenant compte de ce facteur d'échelle ($f$).

8. Procédé selon la revendication 7, dans lequel, à l'étape f2), l'estimation du facteur d'échelle ($f_k$) qui a été déterminée à l'étape f1) précédente est recalée en fonction du rapport entre :

- la première estimation ($v_{1A}$, $v_{1B}$, $v_{1C}$) de la vitesse du véhicule, déterminée à l'étape d) à partir des mesures issues du système radar, et
- l'estimation de la vitesse du véhicule ($v_k$) déterminée à l'étape f1) précédente.

9. Véhicule (1) automobile comprenant un système radar (10A, 10B, 10C) configuré pour exécuter une étape a) de détermination de positions, par rapport au véhicule (1), à un instant donné, d'éléments de l'environnement (E) du véhicule statiques par rapport à une voie de circulation (2) sur laquelle se déplace le véhicule (1),

le système radar (10A, 10B, 10C) étant configuré pour, après avoir exécuté l'étape a) à un instant précédent ($t_n$) pour déterminer les positions précédentes ($O_{j,n}$) desdits éléments par rapport au véhicule (1), exécuter à nouveau l'étape a) à un instant suivant ($t_{n+1}$) pour déterminer les positions suivantes ($O_{i,n+1}$) de ces éléments par rapport au véhicule (1),
le véhicule (1) comprenant en outre une unité de traitement (3) électronique programmée pour exécuter les étapes suivantes :

b) associer lesdites positions précédentes ($O_{j,n}$) auxdites positions suivantes ($O_{i,n+1}$) pour former différents couples de positions regroupant chacun la position précédente et la position suivante d'un même élément de l'environnement du véhicule, cette étape b) comprenant les étapes suivantes :

b1) pour différents couples de positions envisageables regroupant chacun l'une des positions suivantes ($O_{i,n+1}$) et l'une des positions précédentes ($O_{j,n}$), déterminer un coût individuel ($D_{ij}$), associé au couple de positions envisageable considéré, en fonction de la position précédente ($O_{j,n}$) et de la position suivante ($O_{i,n+1}$) de ce couple de positions envisageable, et

b2) parmi différents ensembles de couples de positions envisageables, identifier l'ensemble pour lequel la valeur d'une fonction de coût (F) globale est la plus petite, cette fonction de coût (F) globale étant déterminée en fonction des coûts individuels ($D_{ij}$) associés respectivement aux différents couples de positions de l'ensemble considéré,

les couples de positions formés finalement à l'étape b) étant les couples de positions de l'ensemble ainsi identifié à l'étape b2),

c) déterminer par régression linéaire les caractéristiques (T, θ) d'une translation et une rotation de l'ensemble identifié à l'étape b2) permettant, pour les couples de positions formés à l'étape b), de mettre en correspondance lesdites positions précédentes ($O_{j,n}$) avec lesdites positions suivantes ($O_{i,n+1}$), et déterminer un vecteur de déplacement (T) du véhicule (1) en fonction des caractéristiques de cette translation et de cette rotation.

**Patentansprüche**

1. Verfahren zur Bestimmung eines Bewegungsvektors (T) eines Kraftfahrzeugs (1), umfassend einen Schritt a) des Bestimmens, durch ein Radarsystem (10A, 10B, 10C), mit dem das Fahrzeug (1) ausgestattet ist, von Positionen, in Bezug auf das Fahrzeug (1), zu einem gegebenen Zeitpunkt, von Elementen eines Umfelds (E) des Fahrzeugs (1), die in Bezug auf eine Fahrspur (2), auf der sich das Fahrzeug bewegt, statisch sind,

wobei, nachdem der Schritt a) zu einem vorhergehenden Zeitpunkt ($t_n$) ausgeführt wurden ist, um die vorhergehenden Positionen ($O_{j,n}$) der Elemente in Bezug auf das Fahrzeug (1) zu bestimmen, der Schritt a) zu einem folgenden Zeitpunkt ($t_{n+1}$) erneut ausgeführt wird, um die folgenden Positionen ($O_{i,n+1}$) der Elemente in Bezug auf das Fahrzeug (1) zu bestimmen, wobei das Verfahren **dadurch gekennzeichnet ist, dass** es ferner die folgenden Schritte umfasst:

b) Zuordnen der vorhergehenden Positionen ($O_{j,n}$) zu den folgenden Positionen ($O_{i,n+1}$), um verschiedene Paare von Positionen zu bilden, die jeweils die vorhergehende Position und die folgende Position eines selben Elements des Umfelds des Fahrzeugs gruppieren, wobei dieser Schritt b) die folgenden Schritte umfasst:

b1) für verschiedene denkbare Paare von Positionen, die jeweils eine der folgenden Positionen ($O_{i,n+1}$) und eine der vorhergehenden Positionen ($O_{j,n}$) gruppieren, Bestimmen von Einzelkosten ($D_{ij}$), die dem betrachteten denkbaren Paar von Positionen zugeordnet sind, in Abhängigkeit von der vorhergehenden Position ($O_{j,n}$) und der folgenden Position ($O_{i,n+1}$) dieses denkbaren Paares von Positionen, und

b2) unter verschiedenen Mengen von denkbaren Paaren von Positionen, Identifizieren der Menge, für die der Wert einer Gesamtkostenfunktion (F) am kleinsten ist, wobei diese Gesamtkostenfunktion (F) in Abhängigkeit von den Einzelkosten ($D_{ij}$) bestimmt wird, die den verschiedenen Paaren von Positionen der betrachteten Menge jeweils zugeordnet sind,

wobei die schließlich im Schritt b) gebildeten Paare von Positionen die Paare von Positionen der so im Schritt b2) identifizierten Menge sind, und

c) Bestimmen, durch lineare Regression, der jeweiligen Merkmale (T, θ) einer Translation und einer Rotation der im Schritt b2) identifizierten Menge, was es ermöglicht, für die im Schritt b) gebildeten Paare von Positionen die vorhergehenden Positionen ($O_{j,n}$) mit den folgenden Positionen ($O_{i,n+1}$) in Übereinstimmung zu bringen und den Bewegungsvektor (T) des Fahrzeugs (1) in Abhängigkeit von den Merkmalen der Translation und Rotation zu bestimmen.

2. Verfahren nach Anspruch 1, wobei der Schritt b1) für mindestens eines der denkbaren Paare von Positionen die folgenden Operationen umfasst:

- Verschieben der vorhergehenden Position ($O_{j,n}$) in Abhängigkeit von einer Schätzung der Bewegungsgeschwindigkeit des Fahrzeugs ($v_c$) und von der Dauer (Δt) zwischen dem vorhergehenden und dem folgenden Zeitpunkt, um eine extrapolierte Position ($O'_{j,n}$) zu erhalten,

- Bestimmen einer Abweichung zwischen der folgenden Position ($O_{i,n+1}$)) und der extrapolierten Position ($O'_{j,n}$), und
- Bestimmen der Einzelkosten ($D_{ij}$), die diesem Paar von Positionen zugeordnet sind, so dass sie umso höher sind, je größer die Abweichung ist.

3. Verfahren nach Anspruch 2, wobei im Schritt b1) für mindestens einen Teil der denkbaren Paare von Positionen:

- vor dem Berechnen der Einzelkosten ($D_{ij}$), die dem betrachteten denkbaren Paar von Positionen zugeordnet sind, bestimmt wird, ob es möglich ist oder im Gegenteil unwahrscheinlich ist, dass dieses Paar zwei aufeinander folgende Positionen eines selben Elements des Umfelds des Fahrzeugs gruppiert, und
- wenn bestimmt worden ist, dass es unwahrscheinlich ist, dass dieses Paar zwei aufeinander folgende Positionen eines selben Elements des Umfelds des Fahrzeugs gruppiert, den Einzelkosten ($D_{ij}$) ein vorbestimmter Schwellenwert ($d_{max}$) zugewiesen wird.

4. Verfahren nach Anspruch 3, wobei im Schritt b1) bestimmt wird, dass es unwahrscheinlich ist, dass das betrachtete denkbare Paar von Positionen zwei aufeinander folgende Positionen eines selben Elements des Umfelds des Fahrzeugs gruppiert, wenn eine der folgenden Bedingungen erfüllt ist:

- die Abweichung ist größer als eine denkbare maximale Abweichung,
- eine Bewegungsrichtung des Fahrzeugs, die aus dem betrachteten denkbaren Paar von Positionen abgeleitet wird, ist entgegengesetzt zu einer zuvor bestimmten Bewegungsrichtung des Fahrzeugs,
- eine seitliche Abweichung in Bezug auf eine Bewegungslängsachse des Fahrzeugs, die aus dem betrachteten denkbaren Paar von Positionen abgeleitet wird, ist größer als eine denkbare maximale seitliche Abweichung.

5. Verfahren nach einem der Ansprüche 1 bis 4, wobei der Schritt c) die folgenden Schritte umfasst:

c1) zufälliges Auswählen von mindestens drei Paaren von Positionen unter den im Schritt b) gebildeten Paaren von Positionen,
c2) Bestimmen einer ersten Translation und einer ersten Rotation der im Schritt b2) identifizierten Menge durch lineare Regression ausgehend von den im Schritt c1) ausgewählten Paaren von Positionen,
c3) für jedes Paar von Positionen, das im Schritt b) gebildet wurde und das im Schritt c1) nicht ausgewählt worden ist:

- Umwandeln der folgenden Position ($O_{i,n+1}$) in eine umgewandelte Position ($O^{t1}_{i,n+1}$), indem auf die folgende Position ($O_{i,n+1}$) die erste Translation und die erste Rotation, die im Schritt c2) bestimmt wurden, angewandt werden, und
- Bestimmen eines Rests in Abhängigkeit von einem Abstand zwischen der umgewandelten Position ($O^{t1}_{i,n+1}$) und der vorhergehenden Position ($O_{j,n}$) dieses Paars,

c4) Auswählen einer Teilmenge von Paaren von Positionen, umfassend:

- die im Schritt c1) ausgewählten Paare von Positionen, und
- die Paare von Positionen, die im Schritt b) gebildet wurden, die im Schritt c1) nicht ausgewählt worden sind und für die der Rest kleiner als ein gegebener Grenzwert ist, und

Bestimmen einer zweiten Translation und einer zweiten Rotation durch lineare Regression auf der Basis der vorhergehenden Positionen ($O_{j,n}$) und der folgenden Positionen ($O_{i,n+1}$) der Paare dieser Teilmenge, und
c5) Evaluieren, mit welcher Genauigkeit die zweite Translation und die zweite Rotation die folgenden Positionen der Paare der Positionen dieser Teilmenge in die vorhergehenden Positionen dieser Paare umwandeln,
wobei alle Schritte c1) bis c5) mehrmals nacheinander ausgeführt werden,
wobei die Merkmale ($T$, $\theta$) der Translation und der Rotation, die schließlich im Schritt c) bestimmt werden, die Merkmale der zweiten Translation und der zweiten Rotation sind, die es ermöglichen, die folgenden Positionen ($O_{i,n+1}$) mit der höchsten Genauigkeit in die vorhergehenden Positionen ($O_{j,n}$) umzuwandeln.

6. Verfahren zur Bestimmung einer Bewegungsgeschwindigkeit ($v$) eines Kraftfahrzeugs (1), wobei ein Bewegungsvektor ($T$) des Fahrzeugs (1) nach dem Verfahren nach einem der Ansprüche 1 bis 5 bestimmt wird, wobei das Verfahren zur Bestimmung der Geschwindigkeit des Fahrzeugs ferner die folgenden Schritte umfasst:

d) Bestimmen einer ersten Schätzung ($v_{1A}$, $v_{1B}$, $v_{1C}$) der Geschwindigkeit des Fahrzeugs ausgehend von dem im Schritt c) bestimmten Bewegungsvektors (T) des Fahrzeugs,

e) Bestimmen einer zweiten Schätzung ($v_{fl}$, $v_{fr}$, $v_{rl}$, $v_{rr}$) der Geschwindigkeit des Fahrzeugs in Abhängigkeit von einer Drehzahl eines Rads (6A, 6B, 6C, 6D) des Fahrzeugs (1), die von einem Drehzahlsensor (5A, 5B, 5C, 5D) erfasst wird, und

f) Bestimmen der Geschwindigkeit (v) des Fahrzeugs in Abhängigkeit von der ersten Schätzung ($v_{1A}$, $v_{1B}$, $v_{1C}$) dieser Geschwindigkeit und von der zweiten Schätzung ($v_{fl}$, $v_{fr}$, $v_{rl}$, $v_{rr}$) dieser Geschwindigkeit mittels eines Kalman-Filters, das dazu ausgestaltet ist, die folgenden Schritte auszuführen:

f1) Bestimmen einer neuen Schätzung eines Zustandsvektors des Fahrzeugs, umfassend Komponenten, die insbesondere für die Geschwindigkeit und eine Beschleunigung des Fahrzeugs repräsentativ sind,

f2) Bestimmen einer korrigierten Schätzung des Zustandsvektors des Fahrzeugs durch Anpassen der im Schritt f1) bestimmten Schätzung dieses Zustandsvektors auf der Basis der ersten und der zweiten Schätzung der Geschwindigkeit des Fahrzeugs ($v_{1A}$, $v_{1B}$, $v_{1C}$, $v_{fl}$, $v_{fr}$, $v_{rl}$, $v_{rr}$), die in den Schritten d) und e) bestimmt wurden,

wobei die Schritte f1) und f2) mehrmals nacheinander ausgeführt werden und, wenn der Schritt f1) erneut ausgeführt wird, die neue Schätzung des Zustandsvektors des Fahrzeugs in Abhängigkeit von der korrigierten Schätzung bestimmt wird, die bei der vorhergehenden Ausführung des Schritts f2) bestimmt wurde.

7. Verfahren nach Anspruch 6, wobei:

- die zweite Schätzung ($v_{fl}$, $v_{fr}$, $v_{rl}$, $v_{rr}$) der Bewegungsgeschwindigkeit des Fahrzeugs in Abhängigkeit ferner von einem Nennradius des Rads bestimmt wird, dessen Wert in dem Fahrzeug vorab gespeichert wird,

- eine der Komponenten des durch das Kalman-Filter geschätzten Zustandsvektors des Fahrzeugs ein Skalenfaktor (f) ist, der für eine Abweichung zwischen dem Nennradius und einem tatsächlichen Radius der Räder des Fahrzeugs repräsentativ ist, und wobei

- im Schritt f2) die Schätzung der Geschwindigkeit des Fahrzeugs ($v_k$), die im Schritt f1) bestimmt worden ist, mit der zweiten Schätzung ($v_{fl}$, $v_{fr}$, $v_{rl}$, $v_{rr}$) der Geschwindigkeit des Fahrzeugs unter Berücksichtigung dieses Skalenfaktors (f) verglichen wird.

8. Verfahren nach Anspruch 7, wobei im Schritt f2) die Schätzung des Skalenfaktors ($f_k$), die im vorhergehenden Schritt f1) bestimmt worden ist, angepasst wird in Abhängigkeit von dem Verhältnis zwischen:

- der ersten Schätzung ($v_{1A}$, $v_{1B}$, $v_{1C}$) der Geschwindigkeit des Fahrzeugs, die im Schritt d) ausgehend von den Messungen aus dem Radarsystem bestimmt wurde, und

- der Schätzung der Geschwindigkeit des Fahrzeugs ($v_k$), die im vorhergehenden Schritt f1) bestimmt wurde.

9. Kraftfahrzeug (1), das ein Radarsystem (10A, 10B, 10C) umfasst, das dazu ausgestaltet ist, einen Schritt a) des Bestimmens von Positionen, in Bezug auf das Fahrzeug (1), zu einen gegebenen Zeitpunkt, von Elementen des Umfelds (E) des Fahrzeugs auszuführen, die in Bezug auf eine Fahrspur (2), auf der sich das Fahrzeug (1) bewegt, statisch sind,

wobei das Radarsystem (10A, 10B, 10C) dazu ausgestaltet ist, nachdem der Schritt a) zu einem vorhergehenden Zeitpunkt ($t_n$) ausgeführt wurde, um die vorhergehenden Positionen ($O_{j,n}$) der Elemente in Bezug auf das Fahrzeug (1) zu bestimmen, den Schritt a) zu einem folgenden Zeitpunkt ($t_{n+1}$) erneut auszuführen, um die folgenden Positionen ($O_{i,n+1}$) dieser Elemente in Bezug auf das Fahrzeug (1) zu bestimmen,

wobei das Fahrzeug (1) ferner eine elektronische Verarbeitungseinheit (3) umfasst, die dazu programmiert ist, die folgenden Schritte auszuführen:

b) Zuordnen der vorhergehenden Positionen ($O_{j,n}$) zu den folgenden Positionen ($O_{i,n+1}$), um verschiedene Paare von Positionen zu bilden, die jeweils die vorhergehende Position und die folgende Position eines selben Elements des Umfelds des Fahrzeugs gruppieren, wobei dieser Schritt b) die folgenden Schritte umfasst:

b1) für verschiedene denkbare Paare von Positionen, die jeweils eine der folgenden Positionen ($O_{i,n+1}$) und eine der vorhergehenden Positionen ($O_{j,n}$) gruppieren, Bestimmen von Einzelkosten ($D_{ij}$), die dem betrachteten denkbaren Paar von Positionen zugeordnet sind, in Abhängigkeit von der vorhergehenden Position ($O_{j,n}$) und der folgenden Position ($O_{i,n+1}$) dieses denkbaren Paares von Positionen, und

b2) unter verschiedenen Mengen von denkbaren Paaren von Positionen, Identifizieren der Menge, für die der Wert einer Gesamtkostenfunktion (F) am kleinsten ist, wobei diese Gesamtkostenfunktion (F) in Abhängigkeit von den Einzelkosten ($D_{ij}$) bestimmt wird, die den verschiedenen Paaren von Positionen der betrachteten Menge jeweils zugeordnet sind,

wobei die schließlich im Schritt b) gebildeten Paare von Positionen die Paare von Positionen der so im Schritt b2) identifizierten Menge sind,

c) Bestimmen, durch lineare Regression, der Merkmale (T, $\theta$) einer Translation und einer Rotation der im Schritt b2) identifizierten Menge, was es ermöglicht, für die im Schritt b) gebildeten Paare von Positionen die vorhergehenden Positionen ($O_{j,n}$) mit den folgenden Positionen ($O_{i,n+1}$) in Übereinstimmung zu bringen und einen Bewegungsvektor (T) des Fahrzeugs (1) in Abhängigkeit von den Merkmalen dieser Translation und dieser Rotation zu bestimmen.

**Claims**

1. Method for determining a displacement vector (T) of a motor vehicle (1), comprising a step a) of a radar system (10A, 10B, 10C) fitted to the vehicle (1) determining positions, with respect to the vehicle (1), at a given time, of elements in a surroundings (E) of the vehicle (1) that are static with respect to a traffic lane (2) in which the vehicle is moving, wherein, with step a) having been executed at a previous time ($t_n$) in order to determine the previous positions ($O_{j,n}$) of said elements with respect to the vehicle (1), step a) is executed again at a following time ($t_{n+1}$) in order to determine the following positions ($O_{i,n+1}$) of said elements with respect to the vehicle (1), the method being **characterized in that** it furthermore comprises the following steps:

   b) associating said previous positions ($O_{j,n}$) with said following positions ($O_{i,n+1}$) in order to form various pairs of positions each grouping together the previous position and the following position of the same element in the surroundings of the vehicle, this step b) comprising the following steps:
   b1) for various feasible pairs of positions each grouping together one of the following positions ($O_{i,n+1}$) and one of the previous positions ($O_{j,n}$), determining an individual cost ($D_{ij}$), associated with the feasible pair of positions under consideration, on the basis of the previous position ($O_{j,n}$) and of the following position ($O_{i,n+1}$) of this feasible pair of positions, and
   b2) from among various sets of feasible pairs of positions, identifying the set for which the value of an overall cost function (F) is smallest, this overall cost function (F) being determined on the basis of the individual costs ($D_{ij}$) associated respectively with the various pairs of positions of the set under consideration, the pairs of positions ultimately formed in step b) being the pairs of positions of the set thus identified in step b2), and
   c) determining, by linear regression, the respective features (T, $\theta$) of a translation and rotation of the set identified in step b2) making it possible, for the pairs of positions formed in step b), to match said previous positions ($O_{j,n}$) with said following positions ($O_{i,n+1}$), and determine the displacement vector (T) of the vehicle (1) on the basis of the features of said translation and rotation.

2. Method according to Claim 1, wherein step b1) comprises the following operations for at least one of the feasible pairs of positions:

   - shifting the previous position ($O_{j,n}$), on the basis of an estimate of the speed of movement of the vehicle ($v_c$), and of the duration ($\Delta t$) between said previous and following times, in order to obtain an extrapolated position ($O'_{j,n}$),
   - determining a deviation between the following position ($O_{i,n+1}$) and said extrapolated position ($O'_{j,n}$), and
   - determining the individual cost ($D_{ij}$) associated with this pair of positions, such that it is greater when said deviation is greater.

3. Method according to Claim 2, wherein, in step b1), for at least some of the feasible pairs of positions:

   - prior to calculating the individual cost ($D_{ij}$) associated with the feasible pair of positions under consideration, it is determined whether it is possible, or on the contrary unlikely, that this pair groups together two successive positions of the same element in the surroundings of the vehicle, and
   - when it has been determined that it is unlikely that this pair groups together two successive positions of the same element in the surroundings of the vehicle, said individual cost ($D_{ij}$) is assigned a predetermined threshold value ($d_{max}$).

4. Method according to Claim 3, wherein, in step b1), it is determined that it is unlikely that the feasible pair of positions under consideration groups together two successive positions of the same element in the surroundings of the vehicle when one of the following conditions is met:

- said deviation is greater than a maximum feasible deviation,
- a direction of movement of the vehicle, deduced from the feasible pair of positions under consideration, is opposite a previously determined direction of movement of the vehicle,
- a lateral deviation from a longitudinal axis of movement of the vehicle, deduced from the feasible pair of positions under consideration, is greater than a maximum feasible lateral deviation.

5. Method according to one of Claims 1 to 4, wherein step c) comprises the following steps:

c1) randomly selecting at least three pairs of positions from among the pairs of positions formed in step b),
c2) determining a first translation and a first rotation of the set identified in step b2), by linear regression, from the pairs of positions selected in step c1),
c3) for each pair of positions, formed in step b) and that was not selected in step c1):

- transforming the following position ($O_{i,n+1}$) into a transformed position ($O^{t1}_{i,n+1}$) by applying the first translation and the first rotation determined in step c2) to the following position ($O_{i,n+1}$), and
- determining a residual, on the basis of a distance between said transformed position ($O^{t1}_{i,n+1}$) and the previous position ($O_{j,n}$) of this pair,

c4) selecting a subset of pairs of positions comprising:

- the pairs of positions selected in step c1), and
- the pairs of positions, formed in step b), that were not selected in step c1), and for which said residual is less than a given limit, and

determining a second translation and a second rotation, by linear regression, on the basis of the previous positions ($O_{j,n}$) and the following positions ($O_{i,n+1}$) of the pairs of this subset, and
c5) evaluating the accuracy with which the second translation and the second rotation transform the following positions of the pairs of positions of this subset into the previous positions of these pairs,
the set of steps c1) to c5) being executed several times in succession,
the features (T, θ) of the translation and of the rotation ultimately determined in step c) being the features of the second translation and of the second rotation that make it possible to transform said following positions ($O_{i,n+1}$) into said previous positions ($O_{j,n}$) with the greatest accuracy.

6. Method for determining a speed (v) of movement of a motor vehicle (1), wherein a displacement vector (T) of the vehicle (1) is determined in accordance with the method according to any one of Claims 1 to 5, the method for determining the speed of the vehicle furthermore comprising the following steps:

d) determining a first estimate ($v_{1A}$, $v_{1B}$, $v_{1C}$) of the speed of the vehicle from the displacement vector (T) of the vehicle determined in step c),
e) determining a second estimate ($v_{fl}$, $v_{fr}$, $v_{rl}$, $v_{rr}$) of the speed of the vehicle on the basis of a rotational speed of a wheel (6A, 6B, 6C, 6D) of the vehicle (1) acquired by a rotational speed sensor (5A, 5B, 5C, 5D), and
f) determining the speed (v) of the vehicle on the basis of the first estimate ($v_{1A}$, $v_{1B}$, $v_{1C}$) of this speed and of the second estimate ($v_{fl}$, $v_{fr}$, $v_{rl}$, $v_{rr}$) of this speed, by way of a Kalman filter configured so as to execute the following steps:

f1) determining a new estimate of a state vector of the vehicle, comprising components representative in particular of the speed and of an acceleration of the vehicle,
f2) determining a corrected estimate of the state vector of the vehicle, by calibrating the estimate of this state vector determined in step f1) on the basis of the first and second estimates of the speed of the vehicle ($v_{1A}$, $v_{1B}$, $v_{1C}$, $v_{fl}$, $v_{fr}$, $v_{rl}$, $v_{rr}$) determined in steps d) and e),
steps f1) and f2) being executed several times in succession and, when step f1) is executed again, said new estimate of the state vector of the vehicle is determined on the basis of the corrected estimate determined in the previous execution of step f2).

7. Method according to Claim 6, wherein:

- the second estimate ($v_{fl}$, $v_{fr}$, $v_{rl}$, $v_{rr}$) of the speed of movement of the vehicle is furthermore determined on the basis of a nominal radius of said wheel, the value of which is pre-recorded in the vehicle,
- one of the components of the state vector of the vehicle estimated by the Kalman filter is a scale factor (f), representative of a deviation between said nominal radius and an effective radius of the wheels of the vehicle, and wherein
- in step f2), the estimate of the speed of the vehicle ($v_k$) that was determined in step f1) is compared with the second estimate ($v_{fl}$, $v_{fr}$, $v_{rl}$, $v_{rr}$) of the speed of the vehicle, taking this scale factor (f) into account.

8. Method according to Claim 7, wherein, in step f2), the estimate of the scale factor ($f_k$) that was determined in previous step f1) is calibrated on the basis of the ratio between:

- the first estimate ($v_{1A}$, $v_{1B}$, $v_{1C}$) of the speed of the vehicle, determined in step d) from the measurements from the radar system, and
- the estimate of the speed of the vehicle ($v_k$) determined in previous step f1).

9. Motor vehicle (1) comprising a radar system (10A, 10B, 10C) configured so as to execute a step a) of determining positions, with respect to the vehicle (1), at a given time, of elements in the surroundings (E) of the vehicle that are static with respect to a traffic lane (2) in which the vehicle (1) is moving,

the radar system (10A, 10B, 10C) being configured, after having executed step a) at a previous time ($t_n$) in order to determine the previous positions ($O_{j,n}$) of said elements with respect to the vehicle (1), so as to execute step a) again at a following time ($t_{n+1}$) in order to determine the following positions ($O_{i,n+1}$) of these elements with respect to the vehicle (1),
the vehicle (1) furthermore comprising an electronic processing unit (3) programmed to execute the following steps:
b) associating said previous positions ($O_{j,n}$) with said following positions ($O_{i,n+1}$) in order to form various pairs of positions each grouping together the previous position and the following position of the same element in the surroundings of the vehicle, this step b) comprising the following steps:

b1) for various feasible pairs of positions each grouping together one of the following positions ($O_{i,n+1}$) and one of the previous positions ($O_{j,n}$), determining an individual cost ($D_{ij}$), associated with the feasible pair of positions under consideration, on the basis of the previous position ($O_{j,n}$) and of the following position ($O_{i,n+1}$) of this feasible pair of positions, and
b2) from among various sets of feasible pairs of positions, identifying the set for which the value of an overall cost function (F) is smallest, this overall cost function (F) being determined on the basis of the individual costs ($D_{ij}$) associated respectively with the various pairs of positions of the set under consideration,
the pairs of positions ultimately formed in step b) being the pairs of positions of the set thus identified in step b2),
c) determining, by linear regression, the features (T, 0) of a translation and rotation of the set identified in step b2) making it possible, for the pairs of positions formed in step b), to match said previous positions ($O_{j,n}$) with said following positions ($O_{i,n+1}$), and determining a displacement vector (T) of the vehicle (1) on the basis of the features of this translation and of this rotation.

# Fig.1

# Fig.2

**Fig.3**

**Fig.4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018024569 A1

**Littérature non-brevet citée dans la description**

- Instantaneous ego-motion estimation using doppler radar. **DOMINIK KELLNER et al.** Intelligent Transportation system-(ITSC), 2013, 16th International IEEE Conference on. IEEE, 2013, 869-874
- **M.W.M.G. DISSANAYAKE et al.** A solution to the simultaneous localization and map building (SLAM) problem''. IEEE, 229-241
- **S. ARUN** ; **T. S. HUANG** ; **S. D. BLOSTEIN**. Least-squares fitting of two 3-d point sets. *IEEE Transactions on pattern analysis and machine intelligence*, 1987, vol. 5, 698-700